# EUROPEAN PATENT APPLICATION

(11) **EP 4 757 421 A1**
(43) Date of publication of application: **10.06.2026**
(21) Application number: 23947026.3
(22) Date of filing: 31.07.2023
(51) Int. Cl.: H04W 40/22

(54) **RELAY COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: LENG, Bingxue, Dongguan, Guangdong 523860 (CN); LU, Qianxi, Dongguan, Guangdong 523860 (CN)
(74) Representative: Taor, Simon Edward William
(86) International application number: PCT/CN2023/110297
(87) International publication number: WO 2025/025077

(57) **Abstract**

The present application relates to a relay communication method and a device. The method comprises: a first terminal acquires segmentation information of quality of service (QoS) information of a multi-hop relay link. In embodiments of the present application, on the basis of the segmentation information of the QoS information of the multi-hop relay link, more appropriate QoS information can be segmented for one-hop or multi-hop in the multi-hop relay link.

## Description

### TECHNICAL FIELD

The present disclosure relates to the field of communications, and in particular to a relay communication method and device.

### BACKGROUND

With the development of wireless communication technologies, relay has been introduced in the 3rd Generation Partnership Project (3GPP). A remote terminal can connect to a network through a relay terminal, such as a User Equipment (UE) to Network (U2N) relay. A source terminal can also be connected to a destination terminal through a relay terminal, such as a UE to UE (U2U) relay. Communication based on the relay terminal can extend the communication distance and improve communication reliability. In relay scenarios, parameters related to Quality of Service (QoS) need to be considered.

### SUMMARY

Embodiments of the present disclosure provide a relay communication method and device, which can improve the communication reliability and the communication range.

An embodiment of the present disclosure provides a relay communication method, which includes the following operation.

A first terminal obtains split information of Quality of Service (QoS) information of a multi-hop relay link.

An embodiment of the present disclosure provides a relay communication method, which includes the following operation.

A network device obtains split information of QoS information of a multi-hop relay link.

An embodiment of the present disclosure provides a first terminal, which includes an obtaining unit.

The obtaining unit is configured to obtain split information of QoS information of a multi-hop relay link.

An embodiment of the present disclosure provides a network device, which includes an obtaining unit.

The obtaining unit is configured to obtain split information of QoS information of a multi-hop relay link.

An embodiment of the present disclosure provides a terminal device, which includes a processor and a memory. The memory is configured to store a computer program, and the processor is configured to invoke and run the computer program stored in the memory to cause the terminal device to perform the above-mentioned relay communication method.

An embodiment of the present disclosure provides a network device, which includes a processor and a memory. The memory is configured to store a computer program, and the processor is configured to invoke and run the computer program stored in the memory to cause the network device to perform the above-mentioned relay communication method.

An embodiment of the present disclosure provides a chip, which is configured to perform the above-mentioned relay communication method.

Specifically, the chip includes a processor. The processor configured to invoke and run a computer program from a memory, to cause a device installed with the chip to perform the above-mentioned relay communication method.

An embodiment of the present disclosure provides a computer-readable storage medium. The computer-readable storage medium is configured to store a computer program, which, when run by a device, causes the device to perform the above-mentioned relay communication method.

An embodiment of the present disclosure provides a computer program product. The computer program product includes computer program instructions that cause a computer to perform the above-mentioned relay communication method.

An embodiment of the present disclosure provides a computer program, which, when run by a computer, causes the computer to perform the above-mentioned relay communication method.

Based on the split information of the QoS information of the multi-hop relay link, the embodiments of the present disclosure can perform a more suitable split of the QoS information for one or more hops in the multi-hop relay link.

### BRIEF DESCRIPTION OF THE DRAWINGS

FIG. 1 is a schematic diagram of an application scenario according to an embodiment of the present disclosure.
FIG. 2A is a schematic diagram of 3GPP Transmission Mode 3.
FIG. 2B is a schematic diagram of 3GPP Transmission Mode 4.
FIG. 3 is a schematic diagram of UE-to-UE relay.
FIG. 4 is a schematic flowchart of connection establishment for UE-to-UE relay.
FIG. 5 is a schematic diagram of an architecture of a UE in UE-to-UE relay.
FIG. 6 is a schematic flowchart of a relay communication method according to an embodiment of the present disclosure.
FIG. 7 is a schematic flowchart of a relay communication method according to another embodiment of the present disclosure.
FIG. 8 is a schematic flowchart of a relay communication method according to another embodiment of the present disclosure.
FIGS. 9A, 9B, 9C, and 9D are schematic diagrams of application scenarios of a relay communication method.
FIG. 10 is a schematic flowchart of a relay communication method according to another embodiment of the present disclosure.
FIGS. 11A and 11B are schematic diagrams of application scenarios of a relay communication method.
FIG. 12 is a schematic flowchart of a relay communication method according to another embodiment of the present disclosure.
FIG. 13 is a schematic diagram of an application scenario of a relay communication method.
FIG. 14 is a schematic flowchart of a relay communication method according to another embodiment of the present disclosure.
FIG. 15 is a schematic flowchart of a relay communication method according to another embodiment of the present disclosure.
FIG. 16 is a schematic flowchart of a relay communication method according to another embodiment of the present disclosure.
FIGS. 17A to 17D are schematic flowcharts of examples of splitting QoS in a multi-hop relay link.
FIG. 18 is a schematic block diagram of a first terminal according to an embodiment of the present disclosure.
FIG. 19 is a schematic block diagram of a first terminal according to another embodiment of the present disclosure.
FIG. 20 is a schematic block diagram of a network device according to an embodiment of the present disclosure.
FIG. 21 is a schematic block diagram of a network device according to another embodiment of the present disclosure.
FIG. 22 is a schematic structural diagram of a communication device according to an embodiment of the present disclosure.
FIG. 23 is a schematic block diagram of a chip according to an embodiment of the present disclosure.
FIG. 24 is a schematic block diagram of a communication system according to an embodiment of the present disclosure.

### DETAILED DESCRIPTION

Technical solutions in the embodiments of the disclosure would be described below in combination with the drawings in the embodiments of the disclosure.

The embodiments of the disclosure may be applied to various communication systems, such as a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, an Advanced long term evolution (LTE-A) system, a New Radio (NR) system, an evolution system of NR system, a LTE-based access to unlicensed spectrum (LTE-U) system, a NR-based access to unlicensed spectrum (NR-U) system, a Non-Terrestrial Network (NTN) system, a Universal Mobile Telecommunication System (UMTS), a Wireless Local Area Network (WLAN), a Wireless Fidelity (WiFi), a 5th-Generation communication (5G) system, or another communication system, or the like.

Generally speaking, a limited number of connections are supported by a conventional communication system, and are also easy to be implemented. However, with the development of communication technologies, a mobile communication system may not only support conventional communication, but also support communication such as D2D communication, Machine to Machine (M2M) communication, Machine Type Communication (MTC), Vehicle to Vehicle (V2V) communication, or Vehicle to Everything (V2X) communication, or the like, and the embodiments of the disclosure may also be applied to these communication systems.

In an embodiment, the communication system in the embodiments of the disclosure may be applied to a Carrier Aggregation (CA) scenario, or may be applied to a Dual Connectivity (DC) scenario, or may be applied to a standalone (SA) networking scenario.

In an embodiment, the communication system in the embodiments of the disclosure may be applied to an unlicensed spectrum. The unlicensed spectrum may also be considered to be a shared spectrum. Alternatively, the communication system in the embodiments of the disclosure may also be applied to a licensed spectrum. The licensed spectrum may also be considered to be a non-shared spectrum.

The embodiments of the disclosure describe various embodiments in combination with a network device and a terminal device. The terminal device may also be referred to as a User Equipment (UE), an access terminal, a user unit, a user station, a mobile station, a mobile platform, a remote station, a remote terminal, a mobile device, a user terminal, a terminal, a wireless communication device, a user agent, or a user device, or the like.

The terminal device may be a STAION (ST) in WLAN, or may be a cellular phone, a cordless phone, a Session Initiation Protocol (SIP) phone, a Wireless Local Loop (WLL) station, a Personal Digital Assistant (PDA) device, a handheld device with a wireless communication function, a computing device or other processing devices connected to a wireless modem, a vehicle-mounted device, a wearable device, a terminal device in a next-generation communication system such as an NR network, or a terminal device in a future-evolved Public Land Mobile Network (PLMN) network, or the like.

In the embodiments of the disclosure, the terminal device may be deployed on land, including indoor or outdoor, handheld, wearable, or vehicle-mounted; or may be deployed on a water surface (such as a ship); or may be deployed in the air (such as an aircraft, a balloon, a satellite, or the like).

In the embodiments of the disclosure, the terminal device may be a mobile phone, a tablet computer (Pad), a computer with a wireless transceiving function, a Virtual Reality (VR) terminal device, an Augmented Reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, or a wireless terminal device in smart home, or the like.

As an example rather than limitation, in the embodiments of the disclosure, the terminal device may also be a wearable device. The wearable device may also be referred to as a wearable smart device, which is a general term of wearable devices developed by applying a wearable technology to intelligently design daily wearable objects, such as glasses, gloves, watches, clothing, shoes, or the like. The wearable device is directly worn on the body, or is a portable device integrated into a user's clothing or accessory. The wearable device is not only a hardware device, but also achieves powerful functions through software support, data interaction and cloud interaction. A generalized wearable smart device has full functions and a large size, and may not rely on a smart phone to implement full or part of the functions, such as a smart watch, or smart glasses, or the like; or only focus on a certain type of application function, and needs to be used in cooperation with other devices such as a smart phone, such as various kinds of smart bracelets, smart jewelry, or the like, for monitoring physical signs.

In the embodiments of the disclosure, the network device may be a device communicating with a mobile device. The network device may be an Access Point (AP) in WLAN, a Base Transceiver Station (BTS) in GSM or CDMA, or a NodeB (NB) in WCDMA, or an Evolutional Node B (eNB or eNodeB) in LTE, or a relay station or AP, or a network device (gNB) in a vehicle-mounted device, a wearable device and an NR network, or a network device in a future-evolved PLMN network, or a network device in an NTN network, or the like.

As an example rather than limitation, in the embodiments of the disclosure, the network device may have a mobility characteristic, for example, the network device may be a mobile device. Optionally, the network device may be a satellite or a balloon station. For example, the satellite may be a Low Earth Orbit (LEO) satellite, a Medium Earth Orbit (MEO) satellite, a Geostationary Earth Orbit (GEO) satellite, a High Elliptical Orbit (HEO) satellite, or the like. Optionally, the network device may also be a base station arranged at a position such as land or water area, or other positions.

In the embodiments of the disclosure, the network device may provide services for a cell, and the terminal device may communicate with the network device through transmission resources (such as frequency domain resources or spectrum resources) used by the cell. The cell may be a cell corresponding to the network device (such as a base station), and the cell may belong to a macro base station, or may belong to a base station corresponding to a small cell. The small cell may include a metro cell, a micro cell, a pico cell, a femto cell, or the like. The small cells have characteristics of small coverage and low transmission power, and are suitable for providing high-rate data transmission services.

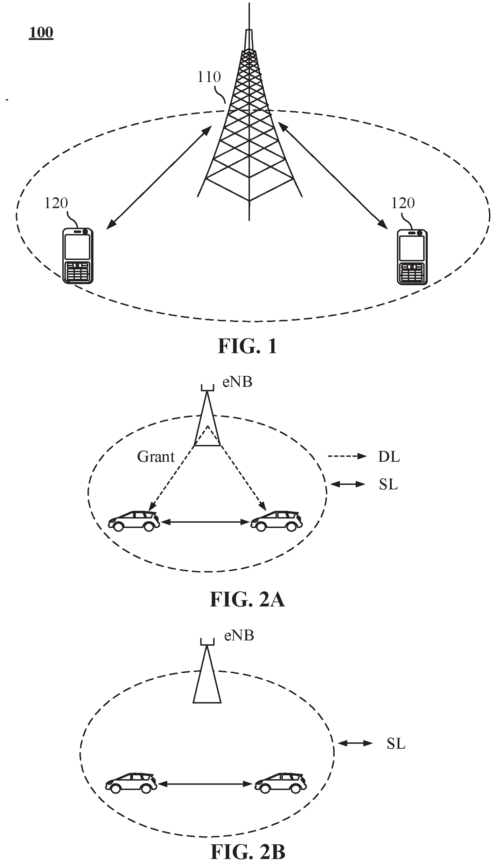

FIG. 1 exemplarily shows a communication system 100, which includes a network device 110 and two terminal devices 120. In an embodiment, the communication system 100 may include multiple network devices 110, and other numbers of terminal devices 120 may be included within a respective coverage of each of the network devices 110, which are not limited in the embodiments of the disclosure.

In an embodiment, the communication system 100 may further include other network entities such as a Mobility Management Entity (MME), an Access and Mobility Management Function (AMF), or the like, which are not limited in the embodiments of the disclosure.

The network device may further include an access network device and a core network device. That is, a wireless communication system may further include multiple core networks communicating with the access network device. The access network device may be an eNB or e-NodeB, a macro base station, a micro base station (also referred to as a "small base station"), a pico base station, an AP, a transmission point (TP), or a new generation Node B (gNodeB) in a LTE system, a Next Radio (NR) system or an Authorized Auxiliary Access Long-Term Evolution (LAA-LTE) system, or the like.

It should be understood that in the embodiments of the disclosure, a device with a communication function in a network/system may be referred to as a communication device. Taking the communication system illustrated in FIG. 1 as an example, the communication device may include a network device and a terminal device of which each has a communication function. Each of the network device and the terminal device may be a specific device in the embodiments of the disclosure, and is not elaborated here. The communication device may further include other devices in the communication system, such as a network controller, a MME or other network entities, which are not limited in the embodiments of the disclosure.

It should be understood that terms "system" and "network" in the disclosure may usually be used interchangeably. In the disclosure, term "and/or" refers to only an association relationship for describing associated objects and represents that three relationships may exist. For example, A and/or B may represent three cases: i.e., only A exists, both A and B exist, and only B exists. Furthermore, character "/" in the disclosure usually represents that previous and next associated objects form an "or" relationship.

It should be understood that "indication" mentioned in the embodiments of the disclosure may be a direct indication, or may be an indirect indication, or may be represented as having an association relationship. For example, A indicates B, which may indicate that A directly indicates B, for example, B may be obtained by A; or may indicate that A indirectly indicates B, for example, A indicates C, and B may be obtained by C; or may indicate that A and B have an association relationship there-between.

In descriptions of the embodiments of the disclosure, term "corresponding" may indicate that there are direct or indirect correspondences between two objects, or may indicate that the two objects have an association relationship there-between, or may have an indicating and indicated relationship, a configuring and configured relationship, or the like.

In order to facilitate understanding the technical solutions of the embodiments of the disclosure, related technologies of the embodiments of the disclosure are described below. The following related technologies may be used as optional solutions, and may be arbitrarily combined with the technical solutions of the embodiments of the disclosure, which belong to a scope of protection of the embodiments of the disclosure.

### 1. LTE Device to Device (D2D)/V2X

Device-to-device communication is a Sidelink (SL) transmission technology based on D2D. Unlike traditional cellular systems where communication data is received or sent through a base station, a V2X system adopts a direct terminal-to-terminal communication mode, thus having higher spectrum efficiency and lower transmission delay.

The 3GPP includes two transmission modes: Mode 3 and Mode 4.

Mode 3: As shown in FIG. 2A, the transmission resources of the terminal are allocated by the base station, and the terminal sends data on the sidelink according to the resources allocated by the base station. The base station may allocate resources for a single transmission to the terminal, or may allocate semi-persistent transmission resources to the terminal.

Mode 4: As shown in FIG. 2B, the vehicle-mounted terminal selects a resource from a resource pool for data transmission.

In the 3GPP, D2D includes different stages:
(1) Proximity based Service (ProSe): In Rel-12/13, device-to-device communication is studied for the ProSe scenario, which mainly targets public safety services.
   In the ProSe, by configuring the position of the resource pool in the time domain (for example, the resource pool is discontinuous in the time domain), the UE may discontinuously send/receive data on the sidelink, thereby achieving power saving.
(2) Vehicle-to-everything (V2X): In Rel-14/15, the V2X system is studied for the scenario of V2V communication, which mainly targets vehicle-to-vehicle and vehicle-to-person communication services with relatively high-speed movement.
   In V2X, since the vehicle-mounted system has continuous power supply, the power efficiency is not a major issue, but the delay of data transmission is a major issue. Therefore, the system design requires the terminal device to perform continuous transmission and reception.
(3) Wearable devices, Further Enhancement to Device-to-Device (FeD2D): In Rel-14, the project studies the scenario where the wearable devices access the network through a mobile phone, which mainly targets scenarios with low movement speed and low-power access.

In the FeD2D, in the pre-research stage, the 3GPP concludes that the base station may configure a Discontinuous Reception (DRX) parameter of a remote terminal through a relay terminal. However, since this project does not further enter the standardization stage, the specific details of how to configure DRX are not concluded.

### 2. NR V2X

On the basis of LTE V2X, NR V2X is not limited to broadcast scenarios, but further expands to unicast and multicast scenarios, and studies the application of V2X in these scenarios.

Similar to LTE V2X, NR V2X also includes two resource grant modes: Mode-1 and Mode-2. Furthermore, the user may be in a hybrid mode, that is, the user may use both Mode-1 and Mode-2 for resource acquisition. The resource acquisition is indicated by means of sidelink grant, that is, the sidelink grant indicates the time-frequency positions of the corresponding Physical Sidelink Control Channel (PSCCH) resource and Physical Sidelink Shared Channel (PSSCH) resource.

Unlike LTE V2X, in addition to feedback-free and UE-initiated Hybrid Automatic Repeat-reQuest (HARQ) retransmission, NR V2X introduces feedback-based HARQ retransmission, which is not limited to unicast communication but also includes multicast communication.

### 3. Sidelink UE-to-UE Relay Technology

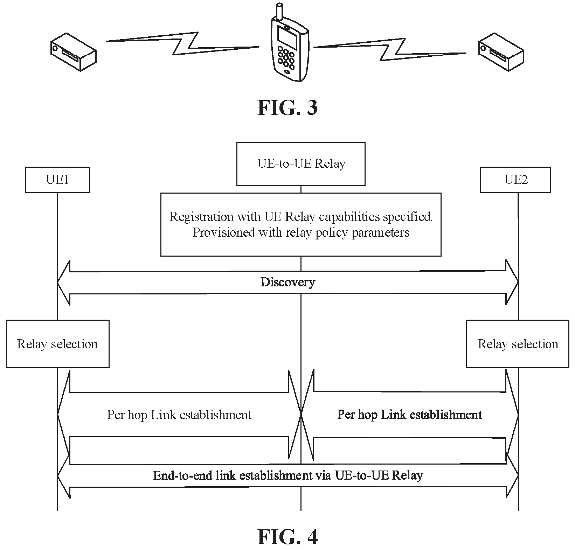

As shown in FIG. 3, in Rel-17 ProSe, the 3GPP includes a UE-to-UE (U2U) relay function based on Layer 2 and Layer 3 relay. That is, a source UE is connected to a destination UE through a relay UE, and the relay UE forwards data between the source UE and the destination UE.

The specific connection establishment steps are shown in FIG. 4. The source UE, the relay UE, and the destination UE discover each other through a discovery message or a direct communication request (DCR) message. The relay UE can help the source UE forward discovery messages or DCR messages. After the source UE and destination UE discover each other, they may perform relay selection to select a suitable relay and establish connections with the relay. The relay acts as a relay to establish an end-to-end Proximity Communication (PC5) connection.

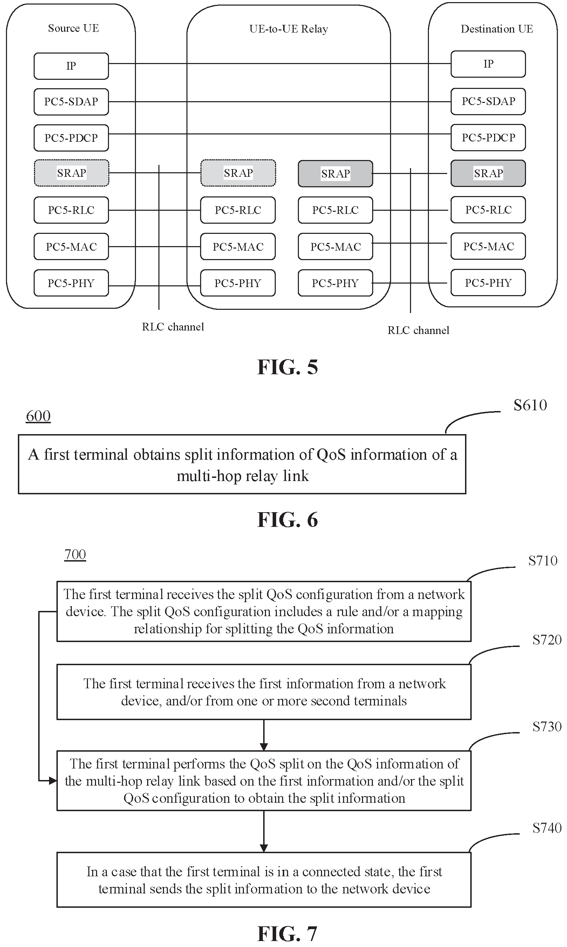

3GPP Rel-17 includes Layer 2 terminal-to-terminal relay. As shown in FIG. 5, an adaptation layer (e.g., a Sidelink Relay Adaptation Protocol (SRAP) layer) is positioned above the Radio Link Control (RLC) sublayer for both the control plane and the user plane between the relay UE and the source UE/destination UE. PC5 Service Data Adaptation Protocol (SDAP)/Packet Data Convergence Protocol (PDCP) and Radio Resource Control (RRC) terminate between the source terminal and the destination. Whereas RLC, Medium Access Control (MAC), and Physical layer (PHY) terminate in each link (i.e., the link between the source terminal and the relay terminal, and the link between the relay terminal and the destination). Whether the adaptation layer is also supported at the PC5 interface between the source UE and the relay UE is currently not concluded.

Examples of L2 UE-to-UE relay are as follows:
(1) The adaptation layer of the relay UE supports mapping of sidelink bearers between access and PC5 RLC channels. For sidelink relay services, different end-to-end bearers (e.g., Signalling Radio Bearer (SRB) and Data Radio Bearer (DRB)) from the same remote UE and/or different remote UEs can be mapped in an N:1 manner and multiplexed over a single PC5 RLC channel.
(2) The adaptation layer is configured to support terminal identification (multiplexing data from multiple terminals) for sidelink services. The terminal PC5 radio bearer and terminal identification information are included in the adaptation layer, so that the destination can associate the received data packets of a specific PDCP entity associated with the radio bearer of the source terminal.

### 4. PC5 QoS, examples are shown in the following table:

| PQI Value | Resource Type | Default Priority Level | Packet Delay Budget | Packet Error Rate | Default Maximum Data Burst Volume | Default Averaging Window | Example Services |
|---|---|---|---|---|---|---|---|
| 24 | GBR (NOTE 1) | 1 | 150 ms | 0⁻² | N/A | 2000 ms | Mission Critical user plane Push To Talk voice (e.g. MCPTT) |
| 25 | | 2 | 200 ms | 0⁻² | N/A | 2000 ms | Non-Mission-Critical user plane Push To Talk voice |
| 26 | | 2 | 200 ms | 0⁻³ | N/A | 2000 ms | Mission Critical Video user plane |
| 60 | Non-GBR | 1 | 120 ms | 0⁻⁶ | N/A | N/A | Mission Critical delay sensitive signalling (e.g. MC-PTT signalling) |
| 61 | | 6 | 400 ms | 0⁻⁶ | N/A | N/A | Mission Critical Data (e.g. example services are the same as 5QI 6/8/9) |
| 92 | Delay Critical GBR (NOTE 1) | 5 | 5ms | 0⁻⁴ | 20000 bytes | 2000 ms | Interactive service - consume VR content with high compression rate via tethered VR headset |
| 93 | | 6 | 10ms | 0⁻⁴ | 20000 bytes | 2000 ms | Interactive service - consume VR content with low compression rate via tethered VR headset; Gaming or Interactive Data Exchanging) |
| NOTE 1:GBR and Delay Critical GBR PQIs can only be used for unicast PC5 communications | | | | | | | |

The PQI in the table may represent a PC5 5G QoS Identifier (5QI). A PQI value may correspond to a set of values or value ranges of QoS information. For example, a PQI value of 25 may correspond to: Resource Type being GBR, Default Priority Level being 2, Packet Delay Budget being 200 ms, Packet Error Rate being 0⁻², Default Maximum Data Burst Volume being N/A, and Default Averaging Window being 2000 ms.

The related technologies mainly focus on single-hop scenarios and do not consider the splitting of QoS in multi-hop scenarios. For example, in single-hop U2U, the relay UE can split the end-to-end Quality of Service (QoS) into QoS parameters for each hop. However, in the multi-hop scenarios, there are multiple (or multi-hop) relays, and the solution provided by the embodiments of the present disclosure may determine one or more of which relay splits the QoS parameters, how to split the QoS parameters, and the splitting process, etc.

FIG. 6 is a schematic flowchart of a relay communication method 600 according to an embodiment of the present disclosure. The method 600 may optionally be applied to the system shown in FIG. 1 to FIG. 5, but is not limited thereto. The method includes at least part of the following content.

S610: A first terminal obtains split information of QoS information of a multi-hop relay link. In an embodiment, the first terminal may be in the multi-hop relay link. In another embodiment, the first terminal may not be in the multi-hop relay link.

In the embodiments of the present disclosure, in a wireless communication scenario (e.g., a sidelink communication scenario), the multi-hop relay link may include two or more relay terminals. In the multi-hop relay link of the embodiments of the present disclosure, a terminal may act as a relay. For example, the multi-hop relay link in the embodiments of the present disclosure may be a U2U relay link. The first terminal may be a terminal in the multi-hop relay link. In a U2U relay link, the first terminal may be a relay terminal in the multi-hop relay link or an end terminal. The end terminal may be located at an edge of the multi-hop relay link, and the end terminal may also be referred to as a remote terminal, an edge terminal, etc. The end terminal may include a source terminal and/or a destination terminal. The first terminal may obtain split information of the QoS information in the multi-hop relay link.

In the embodiments of the present disclosure, the QoS information may include multiple examples, such as the resource type, priority, delay, error rate, default maximum data burst volume, default averaging window, etc., as shown in the above table. The QoS information that needs to be split in the multi-hop relay link can be split to obtain the split information of the QoS information. For example, the overall delay (which may also be referred to as end-to-end delay) is 150ms (milliseconds), and in a three-hop relay link, after splitting, the first hop corresponds to 50ms, the second hop corresponds to 60ms, and the third hop corresponds to 40ms. As another example, the overall averaging window (which may also be referred to as end-to-end averaging window) is 2000ms, and in a four-hop relay link, after splitting, the first hop corresponds to 500ms, the second hop corresponds to 600ms, the third hop corresponds to 700ms, and the fourth hop corresponds to 200ms.

If the QoS information that needs to be split in the multi-hop relay link includes multiple types (such as resource type, priority, delay, error rate, default maximum data burst volume, default averaging window, etc.), the QoS information that can be split may be split, and the QoS information that cannot be split may remain unchanged. For example, the delay, error rate, default maximum data burst volume, default averaging window, etc. may be split according to different hops, and the resource type and priority may remain unchanged.

In the embodiments of the present disclosure, the QoS information that needs to be split in the multi-hop relay link may be the overall QoS information (which may also be referred to as end-to-end QoS information) of the multi-hop relay link, or may be the remaining QoS information (which may also be referred to as the QoS information from this hop to the end) after one or more splits. For example, the delay in the overall QoS information is 150ms, and the averaging window is 2000ms. After one split, the remaining delay is 100ms, and the averaging window is 1500ms. After two splits, the remaining delay is 70ms, and the averaging window is 900ms.

In the embodiments of the present disclosure, based on the split information of the QoS information in the multi-hop relay link, more suitable QoS information can be obtained through splitting for one or more hops in the multi-hop relay link.

FIG. 7 is a schematic flowchart of a relay communication method 700 according to another embodiment of the present disclosure. The method may include one or more features of the above method. In the embodiments of the present disclosure, the device that performs the QoS split may be a terminal device. For example, the first terminal may perform QoS split on the QoS information of the multi-hop relay link.

In an embodiment, as shown in FIG. 7, the method further includes the following operation. At S710, the first terminal receives a split QoS configuration from a network device. The split QoS configuration includes a rule and/or a mapping relationship for splitting the QoS information.

In an embodiment, the method further includes the following operation. At S720, the first terminal receives first information from a network device and/or from one or more second terminals.

In an embodiment, the operation that the first terminal obtains the split information of the QoS information of the multi-hop relay link may include the operation that the first terminal performs QoS split on the QoS information of the multi-hop relay link to obtain the split information.

In an embodiment, as shown in FIG. 7, the operation that the first terminal performs the QoS split on the QoS information of the multi-hop relay link to obtain the split information may include the operation that at S730, the first terminal performs the QoS split on the QoS information of the multi-hop relay link based on first information and/or a split QoS configuration to obtain the split information. The first information may include a QoS split parameter.

In an embodiment, the method may further include the operation that at S740, in a case that the first terminal is in a connected state, the first terminal sends the split information to the network device.

In the embodiments of the present disclosure, the first terminal may itself perform QoS split on the QoS information of the multi-hop relay link. The first terminal may first receive the first information from a network device or other terminals (e.g., a second terminal), and then perform the QoS split based on the first information. The first terminal may also first receive the split QoS configuration from the network device, and then perform the QoS split based on the rule and/or mapping relationship for splitting the QoS information in the split QoS configuration. The first terminal may also first receive the first information and the split QoS configuration, and then perform the QoS split based on the first information and the rule and/or mapping relationship for splitting the QoS information. The first information and the split QoS configuration may be carried in the same message or may be carried in different messages. The first information and the split QoS configuration may be from the same device or may be from different devices. For example, the split QoS configuration is from the network device, and the first information is from the second terminal.

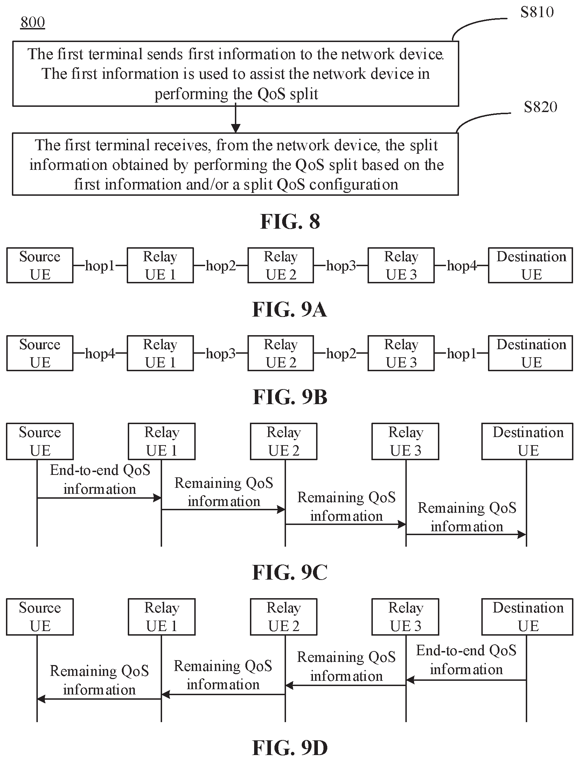

FIG. 8 is a schematic flowchart of a relay communication method 800 according to another embodiment of the present disclosure. The method may include one or more features of the above method. In the embodiments of the present disclosure, the device that performs the QoS split may be a network device. For example, the network device may perform the QoS split on the QoS information of the multi-hop relay link and then send the split information to the first terminal.

In an embodiment, the operation that the first terminal obtains the split information of the QoS information of the multi-hop relay link may include the operation that the first terminal receives the split information which is obtained via QoS split performed by a network device on the QoS information of the multi-hop relay link.

In an embodiment, as shown in FIG. 8, the method further includes the following operations.

At S810, the first terminal sends first information to the network device. The first information is used to assist the network device in performing the QoS split.

In an embodiment, the operation that the first terminal receives the split information which is obtained via the QoS split performed by the network device on the QoS information of the multi-hop relay link may include the operation that at S820, the first terminal receives, from the network device, the split information obtained by performing the QoS split based on the first information and/or the split QoS configuration.

In the embodiments of the present disclosure, the network device may perform the QoS split on the QoS information of the multi-hop relay link based on the first information and then send the split information to the first terminal. The network device may also perform the QoS split on the QoS information of the multi-hop relay link based on the rule and/or mapping relationship for splitting the QoS information. The network device may also perform the QoS split on the QoS information of the multi-hop relay link based on the first information and the rule and/or mapping relationship for splitting the QoS information. After performing the QoS split, the network device may send the obtained split information to one or more terminals in the multi-hop relay network.

In an embodiment, the first information includes at least one of the following QoS split parameters:
a relay hop count;
a measurement result of a terminal;
QoS split suggestion information;
a Radio Resource Control (RRC) state; or
a resource acquisition mode.

In an embodiment, the relay hop count includes a hop count between the first terminal and an end terminal in the multi-hop relay link. The hop count between the first terminal and the end terminal in the multi-hop relay link may also be referred to as the hop count experienced by the first terminal in the multi-hop relay link. For example, as shown in FIG. 9A, assuming that the multi-hop relay link includes a source UE, a relay UE1, a relay UE2, a relay UE3, and a destination UE in sequence. If the number of hops between each UE and the source UE is calculated, the following results can be obtained: the hop count of relay UE1 is 1 (e.g., denoted as hop1), the hop count of relay UE2 is 2 (e.g., denoted as hop2), the hop count of relay UE3 is 3 (e.g., denoted as hop3), and the hop count of the destination UE is 4 (e.g., denoted as hop4). As shown in FIG. 9B, if the number of hops between each UE and the destination UE is calculated, the following results can be obtained: the hop count of the source UE is 4, the hop count of relay UE1 is 3, the hop count of relay UE2 is 2, and the hop count of relay UE3 is 1. The above methods for calculating the hop count are only examples and not limitations. In the embodiments of the present disclosure, there may be many ways to count the hop, for example, the first hop starting from a certain end terminal is counted from 0 and increased by 1 each time; or counted from 10 and increased by 10 each time. Other counting methods are also possible, which are not specifically limited.

The first terminal may perform the QoS split based on the hop count between the first terminal itself and the end terminal in the multi-hop relay link, or send the hop count to the network to obtain the split information of the QoS information of the multi-hop relay link from the network.

In an embodiment, the measurement result of the terminal includes a measurement result of at least one of the first terminal or one or more second terminals in the multi-hop relay link. For example, the measurement quantities in the measurement result may include various types, such as Constant Bit Rate (CBR), Sidelink (SL) Reference Signal Received Power (RSRP), Sidelink Discovery (SD)-RSRP, etc. There may be an association relationship between the measurement quantities and the QoS split method, for example, the higher the SL-RSRP value, the smaller the delay in the QoS information, the shorter the averaging window or the lower the error rate. After obtaining its own measurement result or obtaining measurement results of other terminals (e.g., one or more second terminals), the first terminal may perform the QoS split based on its own and/or other terminals' measurement results, or send the measurement results to the network to obtain the split information of the QoS information of the multi-hop relay link from the network.

In an embodiment, the QoS split suggestion information includes QoS split suggestion information of at least one of the first terminal or one or more second terminals in the multi-hop relay link. For example, the first terminal may obtain its own configured QoS split suggestion information, or may obtain QoS split suggestion information from other terminals (e.g., one or more second terminals). The QoS split suggestion information may include specific split values or split ranges, etc. For example, the split value for delay is 50ms, and the split value for averaging window is 600ms, etc. As another example, the split range for delay is 40ms to 60ms, and the split value for averaging window ranges from 300ms to 700ms, etc. After obtaining its own QoS split suggestion information or obtaining the QoS split suggestion information of other terminals (e.g., one or more second terminals), the first terminal may perform the QoS split based on its own and/or other terminals' QoS split suggestion information, or send the QoS split suggestion information to the network to obtain the split information of the QoS information of the multi-hop relay link from the network.

In an embodiment, the RRC state and/or resource acquisition mode includes an RRC state and/or a resource acquisition mode of the first terminal and one or more second terminals in the multi-hop relay link.

For example, the RRC state may include an idle state, a connected state, and an inactive state. The first terminal may obtain its own RRC state or may obtain the RRC states of other terminals. The first terminal may obtain the split information according to its own and/or other UEs' RRC states. If the first terminal is in an RRC connected state, the first terminal may obtain the split information of the QoS information of the multi-hop relay link from the network. If the first terminal is in an idle state or an inactive state, the first terminal may perform the QoS split by itself. Obtaining the split information according to other UEs' RRC states includes referring to other UEs' RRC states to determine specific values for splitting.

As another example, the resource acquisition mode may include Mode 1 or Mode 2. The Mode 1 indicates that resources are network-scheduled, and the Mode 2 indicates that resources are autonomously selected by the UE. The operation that the first terminal obtains the split information according to the resource acquisition mode may include the following operations. If the first terminal or another terminal is in the Mode 1, the QoS of the hop associated with the UE may be split with higher requirements, such as a shorter Packet Delay Budget (PDB). If the first terminal or another terminal is in the Mode 2, the QoS of the hop associated with the UE may be split with lower requirements, such as a longer PDB.

In an embodiment, the one or more second terminals include one or more terminals in the multi-hop relay link other than the first terminal. In the embodiments of the present disclosure, the first terminal and the second terminal may be different terminals in the multi-hop relay link, and the positional relationship between the first terminal and the second terminal is not limited. The first terminal and the second terminal may be directly connected or not directly connected. For example, in FIG. 9A, the multi-hop relay link includes a source UE, a relay UE1, a relay UE2, a relay UE3, and a destination UE. If the source UE is the first terminal, any one or more of the other terminals may be the second terminal. If the relay UE1 is the first terminal, any one or more of the other terminals may be the second terminal.

In an embodiment, the one or more second terminals include remaining terminals from the first terminal to an end terminal (e.g., at least one of a source terminal, a destination terminal, or a remote terminal) in the multi-hop relay link. In the embodiments of the present disclosure, the first terminal and the second terminal may be different terminals in the multi-hop relay link, and there may be a certain positional relationship between the first terminal and the second terminal. For example, in FIG. 9A, the multi-hop relay link includes a source UE, a relay UE1, a relay UE2, a relay UE3, and a destination UE. If the relay UE1 is the first terminal, among the remaining terminals from the relay UE1 to the destination UE, any one or more of the relay UE2, relay UE3, and destination UE are the second terminal. If the relay UE2 is the first terminal, among the remaining terminals from the relay UE2 to the source UE, the relay UE1 and/or the source UE may be the second terminal.

In an embodiment, the method may further include the operation that the first terminal obtains the QoS information of the multi-hop relay link. The QoS information of the multi-hop relay link may also be referred to as the QoS information to be split. The QoS information of the multi-hop relay link and the first information may be transmitted in the same message or in different messages. The first terminal may obtain the QoS information of the multi-hop relay link and the first information from the same device, or may obtain the QoS information of the multi-hop relay link and the first information from different devices respectively.

In an embodiment, the QoS information of the multi-hop relay link is end-to-end QoS information. The end-to-end QoS information may be obtained from an end terminal, such as at least one of a source terminal or a destination terminal.

In an embodiment, the first terminal is a control terminal, and the control terminal includes at least one of an end terminal, a control relay terminal, or a serving terminal outside the multi-hop relay link.

In an embodiment, a manner of obtaining the end-to-end QoS information includes at least one of:
the control relay terminal receiving the end-to-end QoS information from the end terminal;
the end terminal obtaining the end-to-end QoS information locally; or
the serving terminal receiving the end-to-end QoS information from the end terminal.

For example, the end-to-end QoS information is the QoS information from the source terminal to the destination terminal, or from the destination terminal to the source terminal, or from the remote terminal to the network, or from the network to the remote terminal. The first terminal may obtain the end-to-end QoS information from the source terminal, the destination terminal, or the remote terminal.

In an embodiment, the first terminal may be a control relay terminal. For example, the control relay terminal may obtain the end-to-end QoS information from the end terminal. The first terminal may perform the QoS split based on the end-to-end QoS information, or may send the end-to-end QoS information to the network to obtain the split information of the QoS information of the multi-hop relay link from the network. The end terminal may include at least one of a source terminal, a destination terminal, or a remote terminal.

In an embodiment, a manner of determining the control relay terminal may include at least one of:
a relay terminal directly connected to the end terminal in the multi-hop relay link;
an upper layer of the first terminal indicating that the first terminal is the control relay terminal;
a source terminal configuring that the first terminal is the control relay terminal;
a destination terminal configuring that the first terminal is the control relay terminal;
a remote terminal configuring that the first terminal is the control relay terminal;
a network device configuring that the first terminal is the control relay terminal; or
the first terminal in a connected state being the control relay terminal.

In some examples, if the multi-hop relay link includes a source UE, a relay UE1, a relay UE2, and a destination UE. The source UE is connected to the relay UE1, the relay UE1 is connected to relay UE2, and the relay UE2 is connected to the destination UE. For example, the node closest to the source UE is the relay UE1, and this relay UE1 can serve as the control relay terminal. As another example, the upper layer of the relay UE2 indicates that it can serve as the control relay terminal. As another example, if the node configured by the source UE is the relay UE1, the relay UE1 can serve as the control relay terminal. As another example, if the node configured by the destination UE is the relay UE1, the relay UE1 can serve as the control relay terminal. In the above examples, the QoS information to be split may include the QoS information from the relay UE1 to the destination UE, or from the relay UE1 to the source UE.

In some examples, if the multi-hop relay link includes a network device, a relay UE3, a relay UE4, and a remote UE. The network device is connected to the relay UE3, the relay UE3 is connected to the relay UE4, and the relay UE4 is connected to the destination UE. For example, the node configured by the remote UE is the relay UE3, and this relay UE3 can serve as the control relay terminal. As another example, the node configured by the network device is the relay UE3, and this relay UE3 can serve as the control relay terminal. In the above examples, the QoS information to be split may include the QoS information from the relay UE3 to the remote UE.

In some examples, if there is a terminal in a connected state among the terminals in the multi-hop relay link, the terminal in the connected state may be selected as the control relay terminal to facilitate sending required information to the network.

In an embodiment, the QoS information of the multi-hop relay link includes remaining QoS information from the first terminal to an end terminal (which may be referred to as the QoS information from this hop to the end for short). For example, the remaining QoS information from the first terminal to the end terminal may include the QoS information from the relay terminal (first terminal) to the source terminal or the destination terminal.

In an embodiment, the remaining QoS information is obtained by the first terminal from a first directly connected terminal. The first directly connected terminal is a terminal that has obtained the remaining QoS information in a QoS split direction and is directly connected to the first terminal. The remaining QoS information on the end terminal may be the same as the end-to-end QoS information.

In an embodiment, the first terminal is any relay terminal in the multi-hop relay link. There is a direct communication link between the first terminal and the first directly connected terminal. In U2U relay, the QoS split direction may include a direction from one end terminal to another end terminal (e.g., the direction from the source terminal to the destination terminal, or the direction from the destination terminal to the source terminal). In the embodiments of the present disclosure, the first directly connected terminal may also be referred to as the previous hop terminal or previous hop node of the first terminal.

For example, as shown in FIG. 9C, assuming that the QoS split direction of the multi-hop relay link is from the source UE, through the relay UE1, the relay UE2, and the relay UE3, to the destination UE. For the relay UE1, the first directly connected terminal may be the source UE. For the relay UE2, the first directly connected terminal may be the relay UE1. For the relay UE3, the first directly connected terminal may be the relay UE2.

As another example, as shown in FIG. 9D, assuming that the QoS split direction of the multi-hop relay link is from the destination UE, through the relay UE3, the relay UE2, and the relay UE1, to the source UE. For the relay UE1, the first directly connected terminal may be the relay UE2. For the relay UE2, the first directly connected terminal may be the relay UE3. For the relay UE3, the first directly connected terminal may be the destination UE.

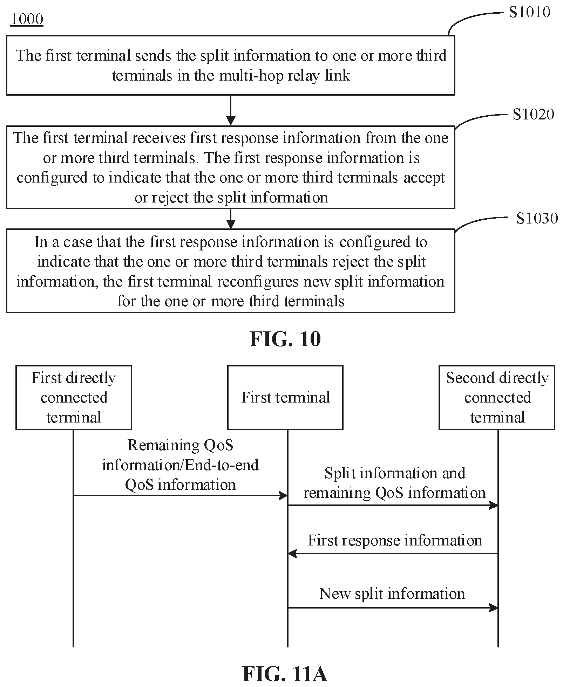

FIG. 10 is a schematic flowchart of a relay communication method 1000 according to another embodiment of the present disclosure. The method may include one or more features of the above method. In an embodiment, the method further includes the following operations.

At S1010, The first terminal sends the split information to one or more third terminals in the multi-hop relay link. In the embodiments of the present disclosure, after obtaining the split information of the QoS information, the first terminal in the multi-hop relay link may send the split information to other nodes (such as terminals or the network) in the multi-hop relay link.

In an embodiment, the one or more third terminals may include one or more terminals in the multi-hop relay link other than the first terminal. Referring to FIG. 9A, if the source UE is the first terminal, any one or more of the other terminals may be the third terminal. If the relay UE1 is the first terminal, any one or more of the other terminals are the third terminal.

In the embodiments of the present disclosure, the second terminal and the third terminal may represent terminals different from the first terminal, but the second terminal and the third terminal may be the same terminal in some scenarios. For example, the relay UE2 (first terminal) may receive the first information and/or the QoS information of the multi-hop relay link to be split from the relay UE1 (second terminal). The relay UE2 may also send the split information to the relay UE1 (third terminal). As another example, the relay UE2 (first terminal) may receive the first information and/or the QoS information of the multi-hop relay link to be split from the relay UE1 (second terminal). The relay UE2 may also send the split information to the relay UE3 (third terminal).

In an embodiment, the one or more third terminals include a first directly connected terminal and/or a second directly connected terminal of the first terminal in the multi-hop relay link. The first directly connected terminal is a terminal that has obtained remaining QoS information in a QoS split direction and is directly connected to the first terminal. The second directly connected terminal is a terminal that has not obtained the remaining QoS information in the QoS split direction and is directly connected to the first terminal. In the embodiments of the present disclosure, the first directly connected terminal may also be referred to as the previous hop terminal or previous hop node of the first terminal. The second directly connected terminal may also be referred to as the next hop terminal or next hop node of the first terminal.

For example, as shown in FIG. 9C, for the relay UE1, the first directly connected terminal may be the source UE, and the second directly connected terminal may be the relay UE2. For the relay UE2, the first directly connected terminal may be the relay UE1, and the second directly connected terminal may be the relay UE3. For the relay UE3, the first directly connected terminal may be the relay UE2, and the second directly connected terminal may be the destination UE.

As another example, as shown in FIG. 9D, for the relay UE1, the first directly connected terminal may be the relay UE2, and the second directly connected terminal may be the source UE. For the relay UE2, the first directly connected terminal may be the relay UE3, and the second directly connected terminal may be the relay UE1. For the relay UE3, the first directly connected terminal may be the destination UE, and the second directly connected terminal may be the relay UE2.

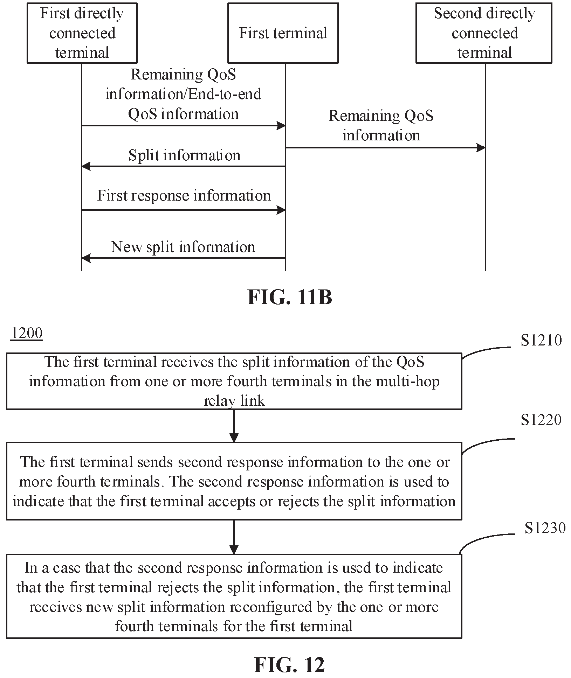

In the embodiments of the present disclosure, the first terminal sends the split information to the second directly connected terminal, which is a backward transmission manner. In this case, after receiving the remaining QoS information (or end-to-end QoS information) from the first directly connected terminal, the first terminal may send both the obtained split information and the remaining QoS information after passing through the first terminal to the second directly connected terminal, as shown in FIG. 11A. The first terminal sends the split information to the first directly connected terminal, which is a forward transmission manner. In this case, after receiving the remaining QoS information (or end-to-end QoS information) from the first directly connected terminal, the first terminal may return the obtained split information to the first directly connected terminal, and send the remaining QoS information after passing through the second terminal to the second directly connected terminal, as shown in FIG. 11B.

In an embodiment, the split information is carried by the PC5-RRC signaling or the PC5 non-access stratum signaling. For example, the PC5 non-access stratum may include a Proximity based Services (ProSe) layer and/or a V2X layer, etc. The PC5 non-access stratum signaling is a type of PC5-S.

In an embodiment, as shown in FIG. 10, the method may further include the following operation.

At S1020, the first terminal receives first response information from the one or more third terminals. The first response information is configured to indicate that the one or more third terminals accept or reject the split information.

In an embodiment, the method may further include the following operation.

At S1030, in a case that the first response information is configured to indicate that the one or more third terminals reject the split information, the first terminal reconfigures new split information for the one or more third terminals. For example, the number of reconfigurations or the reconfiguration time may be limited. In addition, if the first terminal still cannot obtain suitable split information after exceeding the reconfiguration count or the reconfiguration time, a result such as Radio Link Failure (RLF) may be obtained, or a relay reselection may be triggered.

FIG. 12 is a schematic flowchart of a relay communication method 1200 according to another embodiment of the present disclosure. The method may include one or more features of the above method. In an embodiment, as shown in FIG. 12, the method further includes the following operation.

At S1210, the first terminal receives the split information of the QoS information from one or more fourth terminals in the multi-hop relay link.

In an embodiment, the method further includes the following operation.

At S1220, the first terminal sends second response information to the one or more fourth terminals. The second response information is configured to indicate that the first terminal accepts or rejects the split information.

In an embodiment, the method further includes the following operation.

At S1230, in a case that the second response information is configured to indicate that the first terminal rejects the split information, the first terminal receives new split information reconfigured by the one or more fourth terminals for the first terminal.

In an embodiment, the one or more fourth terminals include one or more terminals in the multi-hop relay link other than the first terminal.

In an embodiment, the one or more fourth terminals include a first directly connected terminal and/or a second directly connected terminal of the first terminal in the multi-hop relay link. The first directly connected terminal is a terminal that has obtained the remaining QoS information in a QoS split direction and is directly connected to the first terminal. The second directly connected terminal is a terminal that has not obtained the remaining QoS information in the QoS split direction and is directly connected to the first terminal.

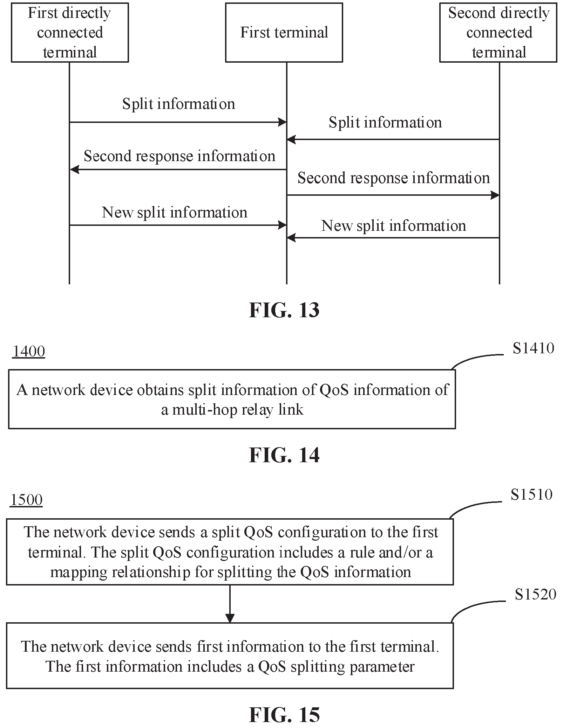

In the embodiments of the present disclosure, referring to FIG. 13, the first directly connected terminal and/or the second directly connected terminal may send the split information to the first terminal. The first terminal may reject or accept the split information through the second response information. If rejected, the first directly connected terminal and/or the second directly connected terminal may reconfigure new split information for the first terminal and send the new split information to the first terminal again.

In the embodiments of the present disclosure, the second terminal, the third terminal, and the fourth terminal may represent terminals different from the first terminal, but the second terminal, the third terminal, and the fourth terminal may be the same terminal in some scenarios. For example, the relay UE2 (first terminal) may receive the first information and/or the QoS information of the multi-hop relay link to be split from the relay UE1 (second terminal). The relay UE2 may also send the split information to the relay UE1 (third terminal). The relay UE2 may also receive the split information from the relay UE1 (fourth terminal). As another example, the relay UE2 (first terminal) may receive the first information and/or the QoS information of the multi-hop relay link to be split from the relay UE1 (second terminal). The relay UE2 may also receive the split information from the relay UE1 (fourth terminal). The relay UE2 may also send the split information to the relay UE3 (third terminal).

In an embodiment, in a case of unidirectional split, an associated hop of a transmitting node in a data transmission direction of the multi-hop relay link is configured with corresponding split information, and the associated hop is a hop from the transmitting node to a directly connected receiving node.

For example, referring to FIG. 9C, assuming that the first direction of the multi-hop relay link is from the source UE, through the relay UE1, the relay UE2 and the relay UE3 in sequence, to the destination UE. Between the relay UE1 and the relay UE2, the former is the transmitting node and the latter is the receiving node. The associated hop of the relay UE1 may be the hop from the relay UE1 to the relay UE2 (such as the hop2). Between the relay UE2 and the relay UE3, the former is the transmitting node and the latter is the receiving node. The associated hop of the relay UE2 may be the hop from the relay UE2 to the relay UE3 (such as the hop3).

As another example, referring to FIG. 9D, assuming that the second direction is the reverse direction of the first direction. The associated hop of the relay UE1 may be the hop from the relay UE1 to the source UE (such as the hop1). Between the relay UE2 and the relay UE3, the former is the transmitting node and the latter is the receiving node. The associated hop of the relay UE2 may be the hop from the relay UE2 to the relay UE1 (such as the hop2).

In an embodiment, in a case of bidirectional split, one or more associated hops of a node in the multi-hop relay link are configured with corresponding split information.

For example, assuming that the multi-hop relay link includes a source UE, a relay UE1, a relay UE2, a relay UE3, and a destination UE. The associated hops of the relay UE1 may include: the hop1 between the source UE and the relay UE1, and the hop2 between the relay UE1 and the relay UE2. The hop1 and the hop2 have corresponding split information 1 and split information 2, respectively.

In an embodiment, a manner of splitting the QoS information includes at least one of:
a sum of delay information of hops in the multi-hop relay link being less than or equal to overall delay information of the multi-hop relay link; or
a product of accuracy rates of the hops in the multi-hop relay link being greater than or equal to an overall accuracy rate of the multi-hop relay link.

For example, referring to FIG. 9A, the multi-hop relay link includes the hop1, the hop2, the hop3, and the hop4, and the sum of the delays of the hop1, the hop2, the hop3, and the hop4 is less than the overall delay of the multi-hop relay link.

As another example, referring to FIG. 9A, the multi-hop relay link includes the hop1, the hop2, the hop3, and the hop4, and the product of the accuracy rates of the hop1, the hop2, the hop3, and the hop4 is greater than or equal to the overall accuracy rate of the multi-hop relay link. Alternatively, the product of the error rates or packet error rates of the hop1, the hop2, the hop3, and the hop4 is less than or equal to the overall error rate or packet error rate of the multi-hop relay link.

FIG. 14 is a schematic flowchart of a relay communication method 1400 according to another embodiment of the present disclosure. The method may optionally be applied to the system shown in FIGS. 1 to 5, but is not limited thereto. The method includes at least part of the following content.

At S1410, a network device obtains split information of QoS information of a multi-hop relay link. In an embodiment, the first terminal and the network device may be in the multi-hop relay link. In another embodiment, the first terminal and/or the network device may not be in the multi-hop relay link.

FIG. 15 is a schematic flowchart of a relay communication method 1500 according to another embodiment of the present disclosure. The method may include one or more features of the above method. In an embodiment, the operation that the network device obtains the split information of the QoS information of the multi-hop relay link may include the operation that the network device receives the split information of the QoS information of the multi-hop relay link from a first terminal.

In an embodiment, the first terminal is in a connected state.

In an embodiment, the method further includes the following operation.

At S1510, the network device sends a split QoS configuration to the first terminal. The split QoS configuration includes a rule and/or a mapping relationship for splitting the QoS information.

In an embodiment, the method further includes the following operation.

At S1520, the network device sends the first information to the first terminal. The first information includes a QoS split parameter.

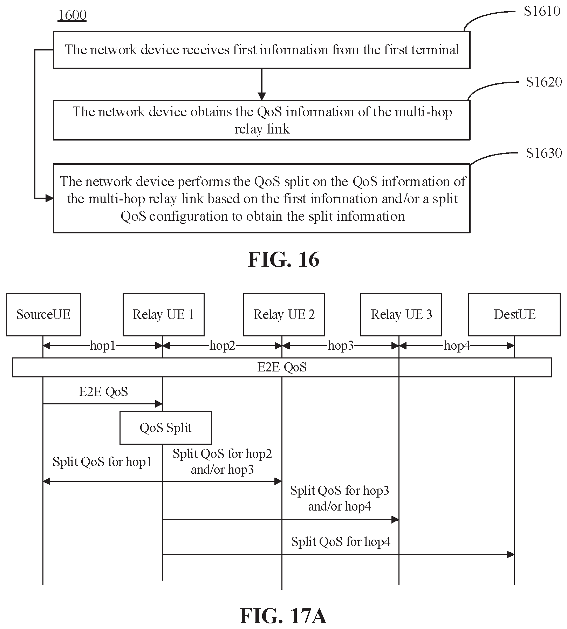

FIG. 16 is a schematic flowchart of a relay communication method 1600 according to another embodiment of the present disclosure. The method may include one or more features of the above method. In an embodiment, the operation that the network device obtains the split information of the QoS information of the multi-hop relay link may include the operation that the network device performs QoS split on the QoS information of the multi-hop relay link to obtain the split information.

In an embodiment, the method further includes the following operation.

At S1610, the network device receives first information from the first terminal. The first information is used to assist the network device in performing the QoS split.

In an embodiment, the method further includes the following operation.

At S1620, the network device obtains the QoS information of the multi-hop relay link.

In an embodiment, the QoS information of the multi-hop relay link includes end-to-end QoS information, or remaining QoS information from the first terminal to an end terminal.

In an embodiment, the operation that the network device performs the QoS split on the QoS information of the multi-hop relay link to obtain the split information may include the following operation. At S1630, the network device performs the QoS split on the QoS information of the multi-hop relay link based on first information and/or a split QoS configuration to obtain the split information.

In an embodiment, the first information includes at least one of the following QoS split parameters:
a relay hop count;
a measurement result of a terminal;
QoS split suggestion information;
a Radio Resource Control (RRC) state; or
a resource acquisition mode.

In an embodiment, the relay hop count includes a hop count between the first terminal and an end terminal in the multi-hop relay link.

In an embodiment, the measurement result of the terminal includes a measurement result of the first terminal and one or more second terminals in the multi-hop relay link.

In an embodiment, the QoS split suggestion information includes QoS split suggestion information of the first terminal and the one or more second terminals in the multi-hop relay link.

In an embodiment, the RRC state and/or resource acquisition mode includes an RRC state and/or a resource acquisition mode of the first terminal and the one or more second terminals in the multi-hop relay link.

In an embodiment, the one or more second terminals include one or more terminals in the multi-hop relay link other than the first terminal.

In an embodiment, the one or more second terminals include remaining terminals from the first terminal to at least one of a source terminal, a destination terminal, or a remote terminal in the multi-hop relay link.

In an embodiment, a manner of splitting the QoS information includes at least one of:
a sum of delay information of hops in the multi-hop relay link being less than or equal to overall delay information of the multi-hop relay link; or
a product of accuracy rates of the hops in the multi-hop relay link being greater than or equal to an overall accuracy rate of the multi-hop relay link.

For specific examples of the network device performing the relay communication methods 1400, 1500, and 1600 in this embodiment, reference may be made to the relevant descriptions about the network device in the relay communication methods 600, 700, 1000, and 1200 performed by the first terminal described above, which are not repeated here for brevity.

The embodiments of the present disclosure can perform the QoS split in a multi-hop relay link. The following are several specific examples.

First example: a control relay node allocates split QoS for each hop and sends the split information to the corresponding nodes.
(1) The manner of determining the control relay node (which may be referred to as the control node for short) includes at least one of the following:
   1. The node closest to the source UE, for example, the relay UE1 in FIG. 17A.
   2. A node indicated by an upper layer (ProSe/V2X layer). The indication may be an explicit indication, or may be an implicit indication through a mapping relationship such as a layer 2 identifier (L2 ID) or a transmission profile (Tx profile).
   3. Configured by the source/destination UE (Dest UE).
   4. A UE configured by the network/a UE in a connected state is the control node.
(2) An example of the QoS split process is as follows:
   1. Before performing the QoS split, the control node obtains at least one piece of the following information (via PC5-S/PC5-RRC):
      E2E (end-to-end) QoS: obtained from the end node.
      The relay hop count experienced by one or more UEs: reported by each relay UE. For example, the hop count experienced by the relay UE2 from the initiator (such as the source end) is 2, and the remaining hop count is 2. The hop count experienced by relay UE3 from the initiator (such as the source end) is 3, and the remaining hop count is 1.
      Measurement reports of other relay UEs: reported by each relay UE. The measurement quantities include one or more of CBR, SL-RSRP, and SD-RSRP.
      Suggested split QoS from other nodes: obtained from other nodes.
      RRC state/resource acquisition mode (mode-1/2) of other nodes.
   2. The control node performs the QoS split based on the above information:
      2-1. The result or manner of the splitting may be configured by the network.
         The control node reports the above information to the network, and the network sends the split information to the control node.
         The network configures the control node with a rule and/or mapping relationship for splitting, i.e., configuration on how to split.
      2-2. Send the split information to each node.

The signaling sent may be PC5-RRC or PC5-S signaling (non-access stratum signaling).

After receiving the split QoS configuration, each node may choose to accept or reject the split QoS configuration. If rejected, the control node can perform the reconfiguration. For example, a maximum number of reconfigurations or a reconfiguration time limit may be set. If the reconfiguration finally fails, Radio Link Failure (RLF) may occur and/or relay reselection may be triggered.

The split QoS configuration may be unidirectional (considering the data transmission direction) or bidirectional (not considering the data transmission direction).

For example, when the split QoS configuration is unidirectional: the data transmission direction from source to destination (SRC->DST) is one set of procedures, and the reverse direction (DST->SRC) is another similar set of procedures. For example, split QoS for one hop is configured for each node. For example, for the relay UE2 in FIG. 17A, only split QoS for hop2 (split QoS for hop-2) needs to be configured, while split QoS for hop3 (split QoS for hop-3) may be configured in another direction.

As another example, when the split QoS configuration is bidirectional: regardless of the direction, the QoS on each hop is the same for the data transmission in both directions. For example, for the relay UE2 in FIG. 17A, the split QoS for hop2 and split QoS for hop3 may both be configured by the same node.

2-3. A connected UE may further report the split QoS (split-QoS) to the network.

3. Examples of QoS parameters to be split and splitting methods.

Delay (e.g., Packet Delay Budget): the sum of the delays of each hop in the multi-hop relay link is less than or equal to the end-to-end delay (e.g., E2E Packet Delay Budget) value, for example: 10=2+2+2+4. Here, 10 is the end-to-end delay, and 2, 2, 2, and 4 are the delays of hop1, hop2, hop3, and hop4, respectively.

Packet Error Rate: (1-PER_hop1) (1-PER_hop2) (1-PER_hop3) >= 1-PER_e2e.

Others: may be the same as E2E on each hop.

Second example: Each hop node allocates split QoS for the previous (or next) hop and the subsequent path and sends it to the corresponding nodes.

### First Method: Previous hop

### QoS split process:

1. Before performing the QoS split, each node may obtain at least one piece of the following information (via PC5-S/PC5-RRC):

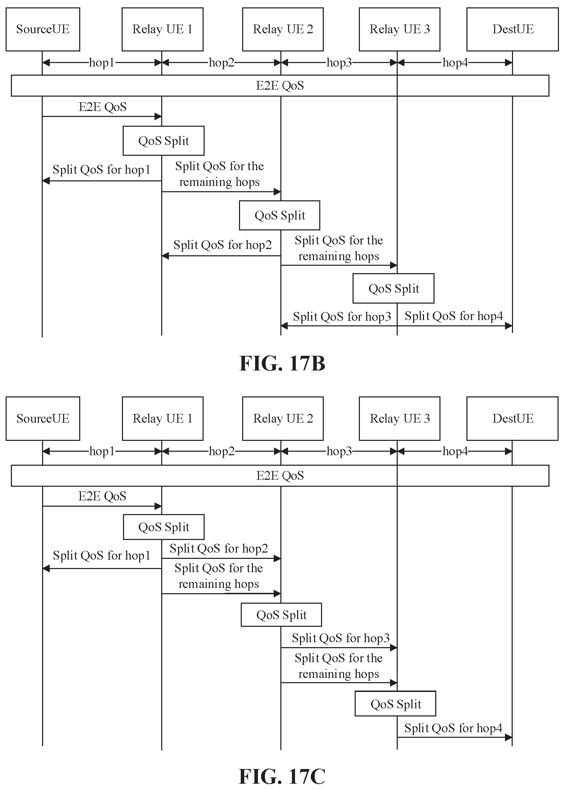

H2E (hop-to-end) QoS: obtained from the previous hop node. For example, in FIG. 17B, the previous hop node of the relay UE2 is the relay UE1, and the relay UE2 may obtain the remaining QoS information after splitting from the relay UE1.

The experienced (remaining) relay hop count: reported by each relay UE. For example, the hop count experienced by the relay UE2 from the initiator (e.g., the source end) is 2, and the remaining hop count is 2. The hop count experienced by the relay UE3 from the initiator (e.g., the source end) is 3, and the remaining hop count is 1.

Measurement reports of other (remaining) relay UEs: reported by each relay UE. The measurement quantities include one or more of CBR, SL-RSRP, and SD-RSRP.

Suggested split QoS from other (remaining) nodes: obtained from other nodes.

RRC state/resource acquisition mode (mode-1/2) of other (remaining) nodes.
2. Each node performs the QoS split based on the above information:
2-1. The split may be configured by the network.

The node reports the above information to the network, and the network sends the split information to the node.

The network configures the node with a rule/mapping relationship for splitting, i.e., configuration on how to split.

2-2. Send the split information to the previous node, and inform the next node of its own remaining QoS or end-to-end QoS (remaining/E2E QoS). For example, referring to FIG. 17B, the relay UE1 sends the split information (e.g., split QoS for hop1) to the source terminal (forward transmission), and sends the split QoS for the remaining hops to the relay UE2 (backward transmission).

The signaling sent is PC5-RRC or PC5-S signaling.

After receiving the split QoS, the node may choose to accept or reject the split QoS configuration. If rejected, the configuring node needs to perform the reconfiguration. For example, a maximum number of reconfigurations or a reconfiguration time limit may be set. If it finally fails, the RLF may occur/ the relay reselection may be triggered.

The configuration may be unidirectional (considering the data transmission direction) or bidirectional (not considering the data transmission direction).

For example, when the configuration is unidirectional: the data transmission direction from source to destination (SRC -> DST) is one set of procedures, and the reverse direction (DST->SRC) is another similar set of procedures.

For example, when the configuration is bidirectional: regardless of the direction, the QoS on each hop is the same for data transmission in both directions, as shown in FIG. 17B.

2-3. A connected UE can further report the split QoS to the network.

3. For examples of QoS parameters to be split and splitting methods, reference can be made to the first Example.

### Second Method: Next hop

Some steps are the same as those of the above first Method, with the main difference being: the node that sends the remaining QoS also sends the split QoS for the intermediate hop between itself and the next hop node to the next hop node. For example, referring to FIG. 17C, the relay UE1 sends both the split information (such as split QoS for hop1) and the split QoS for the remaining hops to the relay UE2 (backward transmission).

In another embodiment, the source UE may directly send the split QoS for hop-1 and the split QoS for the remaining hops to the relay UE1.

### Third Example: The source node allocates the split QoS for each hop and sends the split QoS to the corresponding nodes

### QoS split process:

1. Before performing the QoS split, the source node (such as the source UE) may obtain at least one piece of the following information (via PC5-S/PC5-RRC):

The experienced relay hop count: reported by each relay UE.

Measurement reports of other relay UEs: reported by each relay UE. The measurement quantities include CBR, SL-RSRP, and SD-RSRP.

Suggested split QoS from other nodes: obtained from other nodes.

RRC state/resource acquisition mode (mode-1/2) of other relay UEs.

2. The source node performs the QoS split based on the above information:

2-1. The split may be configured by the network.

The source node reports the above information to the network, and the network sends the split information to the source node.

The network configures the source node with a rule and/or mapping relationship for splitting, i.e., configuration on how to split.

2-2. Send the split information to each node.

The signaling sent is PC5-RRC or PC5-S signaling.

After receiving the split QoS configuration, each node may choose to accept or reject the split QoS configuration. If rejected, the source node can perform the reconfiguration. For example, a maximum number of reconfigurations or a reconfiguration time limit may be set. If it finally fails, the RLF may occur/ the relay reselection may be triggered.

The configuration may be unidirectional (considering the data transmission direction) or bidirectional (not considering the data transmission direction).

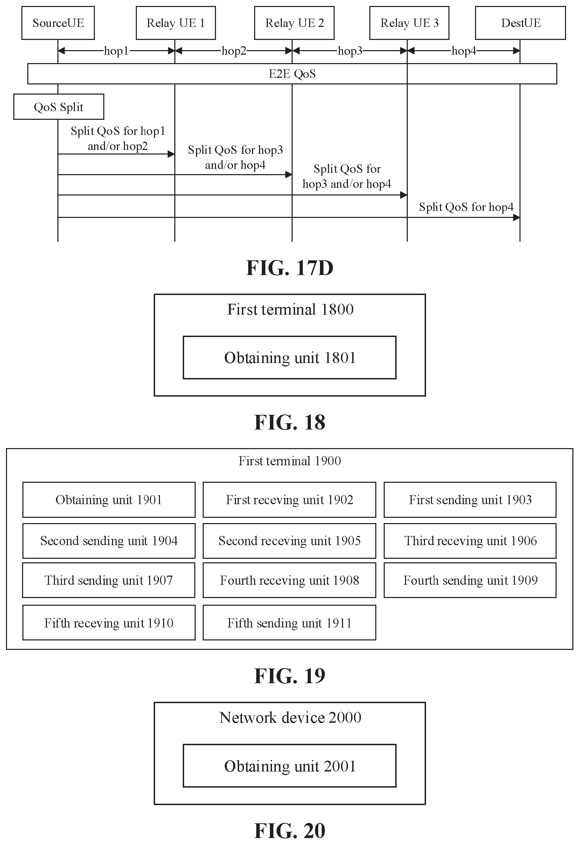

For example, when the configuration is unidirectional: the data transmission direction (SRC->DST) is one set of procedures, and the reverse direction (DST->SRC) is another similar set of procedures in the reverse direction. Moreover, only split QoS for one hop is configured for each node. For example, for the relay UE2 in FIG. 17D, only the split QoS for hop-2 needs to be configured, while the split QoS for hop-3 can be configured in the other direction.

As another example, when the configuration is bidirectional: regardless of the direction, the QoS on each hop is the same for data transmission in both directions. For example, for the relay UE2 in FIG. 17D, the split QoS for hop-2 and the split QoS for hop-3 may both be configured by the same source node.

2-3. A connected UE can further report the split QoS to the network.

3. For examples of QoS parameters to be split and splitting methods, reference can be made to the first Example.

The embodiments of the present disclosure provide a QoS enhancement mechanism for multi-hop U2U relay, which can flexibly allocate suitable QoS information for one or more hops of the multi-hop relay link.

FIG. 18 is a schematic block diagram of a first terminal 1800 according to an embodiment of the present disclosure. The first terminal 1800 includes an obtaining unit 1801 configured to obtain split information of Quality of Service (QoS) information of a multi-hop relay link.

FIG. 19 is a schematic block diagram of a first terminal 1900 according to another embodiment of the present disclosure. The first terminal includes one or more features of the aforementioned first terminal. The first terminal 1900 may include an obtaining unit 1901 configured to obtain split information of Quality of Service (QoS) information of a multi-hop relay link.

In an embodiment, the obtaining unit is configured to perform QoS split on the QoS information of the multi-hop relay link to obtain the split information.

In an embodiment, the splitting subunit is configured to perform the QoS split on the QoS information of the multi-hop relay link based on first information and/or a split QoS configuration to obtain the split information. The first information includes a QoS split parameter.

In an embodiment, the first terminal further includes a first receiving unit 1902.

The first receiving unit 1902 is configured to receive the split QoS configuration from a network device. The split QoS configuration includes a rule and/or a mapping relationship for splitting the QoS information.

In an embodiment, the first terminal further includes a first sending unit 1903.

The first sending unit 1903 is configured to send the split information to a network device in a case that the first terminal is in a connected state.

In an embodiment, the obtaining unit is configured to receive the split information which is obtained via QoS split performed by a network device on the QoS information of the multi-hop relay link.

In an embodiment, the first terminal further includes a second sending unit 1904 and a second receiving unit 1905.

The second sending unit 1904 is configured to send first information to the network device. The first information is used to assist the network device in performing the QoS split.

The second receiving unit 1905 is configured to receive the split information which is obtained via the QoS split performed by the network device on the QoS information of the multi-hop relay link, which includes the operation that the first terminal receives, from the network device, the split information obtained by performing the QoS split based on the first information and/or a split QoS configuration.

In an embodiment, the first information includes at least one of the following QoS split parameters:
a relay hop count;
a measurement result of a terminal;
QoS split suggestion information;
a Radio Resource Control (RRC) state; or
a resource acquisition mode.

In an embodiment, the relay hop count includes a hop count between the first terminal and an end terminal in the multi-hop relay link.

In an embodiment, the measurement result of the terminal includes a measurement result of at least one of the first terminal or one or more second terminals in the multi-hop relay link.

In an embodiment, the QoS split suggestion information includes QoS split suggestion information of at least one of the first terminal and one or more second terminals in the multi-hop relay link.

In an embodiment, the RRC state and/or the resource acquisition mode includes an RRC state and/or a resource acquisition mode of the first terminal and one or more second terminals in the multi-hop relay link.

In an embodiment, the first terminal further includes a third receiving unit 1906.

The third receiving unit 1906 is configured to receive the first information from a network device, and/or from one or more second terminals.

In an embodiment, the one or more second terminals include one or more terminals in the multi-hop relay link other than the first terminal. Alternatively, the one or more second terminals include remaining terminals from the first terminal to an end terminal in the multi-hop relay link.

In an embodiment, the obtaining unit is further configured to obtain the QoS information of the multi-hop relay link.

In an embodiment, the QoS information of the multi-hop relay link includes end-to-end QoS information.

In an embodiment, the first terminal is a control terminal, and the control terminal includes at least one of an end terminal, a control relay terminal, or a serving terminal outside the multi-hop relay link.

In an embodiment, a manner of obtaining the end-to-end QoS information includes at least one of:
the control relay terminal receiving the end-to-end QoS information from the end terminal;
the end terminal obtaining the end-to-end QoS information locally; or
the serving terminal receiving the end-to-end QoS information from the end terminal.

In an embodiment, a manner of determining the control relay terminal includes at least one of:
a relay terminal directly connected to the end terminal in the multi-hop relay link;
an upper layer of the first terminal indicating that the first terminal is the control relay terminal;
a source terminal configuring that the first terminal is the control relay terminal;
a destination terminal configuring that the first terminal is the control relay terminal;
a remote terminal configuring that the first terminal is the control relay terminal;
a network device configuring that the first terminal is the control relay terminal; or
the first terminal in a connected state being the control relay terminal.

In an embodiment, the QoS information of the multi-hop relay link includes remaining QoS information from the first terminal to an end terminal.

In an embodiment, the remaining QoS information is obtained by the first terminal from a first directly connected terminal, and the first directly connected terminal is a terminal that has obtained the remaining QoS information in a QoS split direction and is directly connected to the first terminal.

In an embodiment, the first terminal is any relay terminal in the multi-hop relay link.

In an embodiment, the first terminal further includes a third sending unit 1907.

The third sending unit 1907 is configured to send the split information to one or more third terminals in the multi-hop relay link.

In an embodiment, the first terminal further includes a fourth receiving unit 1908.

The fourth receiving unit 1908 is configured to receive first response information from the one or more third terminals. The first response information is configured to indicate that the one or more third terminals accept or reject the split information.

In an embodiment, the first terminal further includes a fourth sending unit 1909.

The fourth sending unit 1909 is further configured to reconfigure new split information for the one or more third terminals in a case that the first response information is configured to indicate that the one or more third terminals reject the split information.

In an embodiment, the one or more third terminals include one or more terminals in the multi-hop relay link other than the first terminal.

In an embodiment, the one or more third terminals include a first directly connected terminal and/or a second directly connected terminal of the first terminal in the multi-hop relay link. The first directly connected terminal is a terminal that has obtained remaining QoS information in a QoS split direction and is directly connected to the first terminal, and the second directly connected terminal is a terminal that has not obtained the remaining QoS information in the QoS split direction and is directly connected to the first terminal.

In an embodiment, the first terminal further includes a fifth receiving unit 1910.

The fifth receiving unit 1910 is configured to receive the split information from one or more fourth terminals in the multi-hop relay link.

In an embodiment, the first terminal further includes a fifth sending unit 1911.

The fifth sending unit 1911 is configured to send second response information to the one or more fourth terminals. The second response information is configured to indicate that the first terminal accepts or rejects the split information.

In an embodiment, the fifth receiving unit 1910 is further configured to receive new split information reconfigured by the one or more fourth terminals for the first terminal in a case that the second response information is configured to indicate that the first terminal rejects the split information.

In an embodiment, the one or more fourth terminals include one or more terminals in the multi-hop relay link other than the first terminal.

In an embodiment, the one or more fourth terminals include a first directly connected terminal and/or a second directly connected terminal of the first terminal in the multi-hop relay link. The first directly connected terminal is a terminal that has obtained remaining QoS information in a QoS split direction and is directly connected to the first terminal, and the second directly connected terminal is a terminal that has not obtained the remaining QoS information in the QoS split direction and is directly connected to the first terminal.

In an embodiment, the split information is carried by PC5-RRC signaling or PC5 non-access stratum signaling.

In an embodiment, in a case of unidirectional split, an associated hop of a transmitting node in a data transmission direction of the multi-hop relay link is configured with corresponding split information, and the associated hop is a hop from the transmitting node to a directly connected receiving node.

In an embodiment, in a case of bidirectional split, one or more associated hops of a node in the multi-hop relay link are configured with corresponding split information.

In an embodiment, a manner of splitting the QoS information includes at least one of:
a sum of delay information of hops in the multi-hop relay link being less than or equal to overall delay information of the multi-hop relay link; or
a product of accuracy rates of the hops in the multi-hop relay link being greater than or equal to an overall accuracy rate of the multi-hop relay link.

The first terminals 1800, 1900 in the embodiments of the present disclosure can implement the corresponding functions of the first terminal in the foregoing method embodiments. The procedures, functions, implementations, and beneficial effects corresponding to the various modules (sub-modules, units, or components, etc.) in the first terminals 1800, 1900 can be referred to the corresponding descriptions in the aforementioned method embodiments, and are not repeated here. It should be noted that the functions described for the various modules (sub-modules, units, or components, etc.) in the first terminals 1800, 1900 of the embodiments of the present disclosure can be implemented by different modules (sub-modules, units, or components, etc.) or by the same module (sub-module, unit, or component, etc.).

FIG. 20 is a schematic block diagram of a network device 2000 according to an embodiment of the present disclosure. The network device 2000 may include an obtaining unit 2001 that is configured to obtain split information of QoS information of a multi-hop relay link.

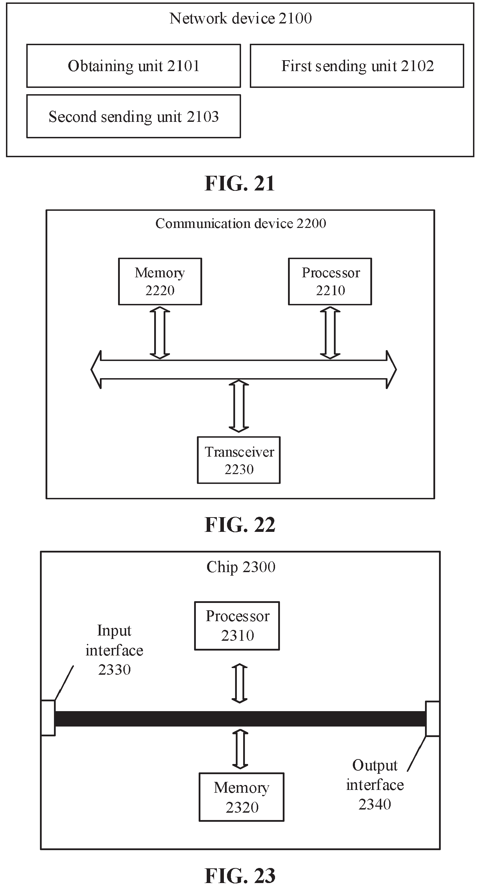

FIG. 21 is a schematic block diagram of a network device 2100 according to an embodiment of the present disclosure. The first terminal includes one or more features of the aforementioned network device. The network device 2100 may include an obtaining unit 2101 that is configured to obtain split information of QoS information of a multi-hop relay link.

In an embodiment, the obtaining unit 2101 is configured to receive the split information of the QoS information of the multi-hop relay link from a first terminal.

In an embodiment, the first terminal is in a connected state.

In an embodiment, the network device further includes a first sending unit 2102.

The first sending unit 2102 is configured to send a split QoS configuration to the first terminal. The split QoS configuration includes a rule and/or a mapping relationship for splitting the QoS information.

In an embodiment, the network device further includes a second sending unit 2103.

The second sending unit 2103 is configured to send first information to the first terminal. The first information includes a QoS split parameter.

In an embodiment, the obtaining unit is configured to perform the QoS split on the QoS information of the multi-hop relay link to obtain the split information.

In an embodiment, the obtaining unit is configured to receive first information from the first terminal and perform the QoS split on the QoS information of the multi-hop relay link based on the first information and/or a split QoS configuration to obtain the split information. The first information is used to assist the network device in performing the QoS split.

In an embodiment, the first information includes at least one of the following QoS split parameters:
a relay hop count;
a measurement result of a terminal;
QoS split suggestion information;
an RRC state; or
a resource acquisition mode.

In an embodiment, the relay hop count includes a hop count between the first terminal and an end terminal in the multi-hop relay link.

In an embodiment, the measurement result of the terminal includes a measurement result of the first terminal and one or more second terminals in the multi-hop relay link.

In an embodiment, the QoS split suggestion information includes QoS split suggestion information of the first terminal and one or more second terminals in the multi-hop relay link.

In an embodiment, the RRC state and/or the resource acquisition mode includes an RRC state and/or a resource acquisition mode of the first terminal and one or more second terminals in the multi-hop relay link.

In an embodiment, the one or more second terminals include one or more terminals in the multi-hop relay link other than the first terminal. Alternatively, the one or more second terminals include remaining terminals from the first terminal to an end terminal in the multi-hop relay link.

In an embodiment, the obtaining unit is further configured to obtain the QoS information of the multi-hop relay link.

In an embodiment, the QoS information of the multi-hop relay link includes end-to-end QoS information, or remaining QoS information from the first terminal to an end terminal.

In an embodiment, a manner of splitting the QoS information includes at least one of:
a sum of delay information of hops in the multi-hop relay link being less than or equal to overall delay information of the multi-hop relay link; or
a product of accuracy rates of the hops in the multi-hop relay link being greater than or equal to an overall accuracy rate of the multi-hop relay link.

The network devices 2000, 2100 in the embodiments of the present disclosure can implement the corresponding functions of the network device in the foregoing method embodiments. The procedures, functions, implementations, and beneficial effects corresponding to the various modules (sub-modules, units, or components, etc.) in the network devices 2000, 2100 can be referred to the corresponding descriptions in the aforementioned method embodiments, and are not repeated here. It should be noted that the functions described for the various modules (sub-modules, units, or components, etc.) in the network devices 2000, 2100 of the embodiments of the present disclosure can be implemented by different modules (sub-modules, units, or components, etc.) or by the same module (sub-module, unit, or component, etc.).

FIG. 22 is a schematic structural diagram of a communication device 2200 according to an embodiment of the present disclosure. The communication device 2200 includes a processor 2210. The processor 2210 can invoke and run a computer program from a memory to cause the communication device 2200 to implement the method in the embodiments of the present disclosure.

In an embodiment, the communication device 2200 may further include a memory 2220. The processor 2210 can invoke and run a computer program from the memory 2220 to cause the communication device 2200 to implement the method in the embodiments of the present disclosure.

The memory 2220 may be a separate device independent of the processor 2210 or may be integrated in the processor 2210.

In an embodiment, the communication device 2200 may further include a transceiver 2230. The processor 2210 may control the transceiver 2230 to communicate with other devices, specifically, to send information or data to other devices, or receive information or data sent by other devices.

The transceiver 2230 may include a transmitter and a receiver. The transceiver 2230 may further include one or more antennas.

In an embodiment, the communication device 2200 may be the network device in the embodiments of the present disclosure, and the communication device 2200 may implement the corresponding processes implemented by the network device in the various methods of the embodiments of the present disclosure. For brevity, details are not repeated here.

In an embodiment, the communication device 2200 may be the terminal device in the embodiments of the present disclosure, such as a first terminal, a second terminal, a third terminal, or a fourth terminal, and the communication device 2200 may implement the corresponding processes implemented by the terminal device in the various methods of the embodiments of the present disclosure. For brevity, details are not repeated here.

FIG. 23 is a schematic structural diagram of a chip 2300 according to an embodiment of the present disclosure. The chip 2300 includes a processor 2310. The processor 2310 can invoke and run a computer program from a memory to implement the method in the embodiments of the present disclosure.

In an embodiment, the chip 2300 may further include a memory 2320. The processor 2310 can invoke and run a computer program from the memory 2320 to implement the method performed by the terminal device or the network device in the embodiments of the present disclosure.

The memory 2320 may be a separate device independent of the processor 2310 or may be integrated in the processor 2310.

In an embodiment, the chip 2300 may further include an input interface 2330. The processor 2310 may control the input interface 2330 to communicate with other devices or chips, specifically, to obtain information or data sent by other devices or chips.

In an embodiment, the chip 2300 may further include an output interface 2340. The processor 2310 may control the output interface 2340 to communicate with other devices or chips, specifically, to output information or data to other devices or chips.

In an embodiment, the chip may be applied to the network device in the embodiments of the present disclosure, and the chip may implement the corresponding processes implemented by the network device in the various methods of the embodiments of the present disclosure. For brevity, details are not repeated here.

In an embodiment, the chip may be applied to the terminal device in the embodiments of the present disclosure, and the chip may implement the corresponding processes implemented by the terminal device in the various methods of the embodiments of the present disclosure. For brevity, details are not repeated here.

The chips applied to the network device and the terminal device may be the same chip or different chips.

It should be understood that the chip mentioned in the embodiment of the disclosure may also be referred to as a system-level chip, a system chip, a chip system, an on-chip system chip, or the like.

The processor as mentioned above may be a general-purpose processor, a Digital Signal Processor (DSP), a Field Programmable Gate Array (FPGA), an Application Specific Integrated Circuit (ASIC), or other programmable logical devices, a transistor logical device, a discrete hardware component, or the like. The general-purpose processor as mentioned above may be a microprocessor, or may be any conventional processor, or the like.

The memory as mentioned above may be a volatile memory or a non-volatile memory, or may include both the volatile and non-volatile memories. The non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM).

It should be understood that the memory as mentioned above is illustrative rather than restrictive. For example, the memory in the embodiments of the disclosure may also be a Static RAM (SRAM), a Dynamic RAM (DRAM), a Synchronous DRAM (SDRAM), a Double Data Rate SDRAM (DDR SDRAM), an Enhanced SDRAM (ESDRAM), a Synch Link DRAM (SLDRAM), a Direct Rambus RAM (DR RAM), or the like. That is, the memory in the embodiments of the disclosure is intended to include, but is not limited to, memories of these and any other proper types.

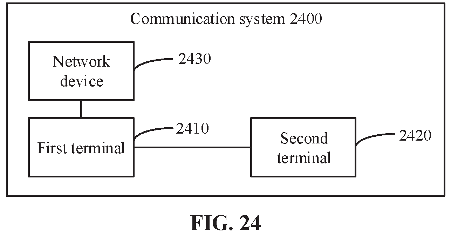

FIG. 24 is a schematic block diagram of a communication system 2400 according to an embodiment of the present disclosure. The communication system 2400 includes a first terminal 2410.

The first terminal 2410 is configured to obtain split information of QoS information of a multi-hop relay link. The first terminal 2410 may be configured to implement the corresponding functions performed by the first terminal in the methods described above.

In an embodiment, the communication system may further include a second terminal 2420 that is configured to receive the split information of the QoS information of the multi-hop relay link from the first terminal. For example, the first terminal and the second terminal may be in the multi-hop relay link. The second terminal 2420 may be configured to implement the corresponding functions performed by the second terminal in the methods described above.

In an embodiment, the communication system may further include a network device 2430 that is configured to obtain split information of the QoS information of the multi-hop relay link. The network device 2430 may be configured to implement the corresponding functions performed by the network device in the methods described above. For brevity, details are not repeated here.

All or part of the foregoing embodiments may be implemented by software, hardware, firmware, or any combination thereof. When implemented by using software, all or part of the foregoing embodiments may be implemented in a form of a computer program product. The computer program product includes one or more computer instructions. When the computer program instructions are loaded and executed on a computer, all or part of the processes or functions according to the embodiments of the disclosure are generated. The computer may be a general-purpose computer, a special purpose computer, a computer network, or another programmable device. The computer instructions may be stored in a computer-readable storage medium or transmitted from one computer-readable storage medium to another computer-readable storage medium. For example, the computer instructions may be transmitted from one website site, computer, server or data center to another website site, computer, server or data center in a wired (e.g., coaxial cable, optical fiber, Digital Subscriber Line (DSL)) or wireless (e.g., infrared, wireless, microwave, or the like) manner. The computer-readable storage medium may be any available medium accessible by a computer, or a data storage device integrated with one or more available media, such as a server or a data center. The available medium may be a magnetic medium (such as a floppy disk, a hard disk, or a magnetic tape), an optical medium (such as a Digital Versatile Disk (DVD)), or a semiconductor medium (such as a Solid State Disk (SSD)), or the like.

It should be understood that in various embodiments of the disclosure, size of a serial number of each process does not indicate an execution sequence of each process, and the execution sequence of each process should be determined by its function and internal logic, and should not form any limitation on implementation processes of the embodiments of the disclosure.

It should be clearly understood by those skilled in the art that for convenience and brevity of descriptions, specific working processes of the system, device and unit as mentioned above may refer to corresponding processes in the foregoing method embodiments, which are not elaborated here.

The foregoing are only specific embodiments of the disclosure, however, the scope of protection of the disclosure is not limited thereto. Variation and substitution which may be readily conceived by those skilled in the art within the technical scope disclosed in the disclosure should fall within the scope of protection of the disclosure. Therefore, the scope of protection of the disclosure should conform to the scope of protection of the claims.

## Claims

1. A relay communication method, comprising:
obtaining, by a first terminal, split information of Quality of Service (QoS) information of a multi-hop relay link.

2. The method of claim 1, wherein obtaining, by the first terminal, the split information of the QoS information of the multi-hop relay link:
performing, by the first terminal, QoS split on the QoS information of the multi-hop relay link to obtain the split information.

3. The method of claim 2, wherein performing, by the first terminal, the QoS split on the QoS information of the multi-hop relay link to obtain the split information comprises:
performing, by the first terminal, the QoS split on the QoS information of the multi-hop relay link based on first information and/or a split QoS configuration to obtain the split information, wherein the first information comprises a QoS split parameter.

4. The method of claim 3, further comprising:
receiving, by the first terminal, the split QoS configuration from a network device, wherein the split QoS configuration comprises a rule and/or a mapping relationship for splitting the QoS information.

5. The method of any one of claims 2 to 4, further comprising:
in a case that the first terminal is in a connected state, sending, by the first terminal, the split information to a network device.

6. The method of claim 1, wherein obtaining, by the first terminal, the split information of the QoS information of the multi-hop relay link comprises:
receiving, by the first terminal, the split information which is obtained via QoS split performed by a network device on the QoS information of the multi-hop relay link.

7. The method of claim 6, further comprising:
sending, by the first terminal, first information to the network device, wherein the first information is used to assist the network device in performing the QoS split,
wherein receiving, by the first terminal, the split information which is obtained via the QoS split performed by the network device on the QoS information of the multi-hop relay link comprises:
receiving, by the first terminal from the network device, the split information obtained by performing the QoS split based on the first information and/or a split QoS configuration.

8. The method of claim 3, 4 or 7, wherein the first information comprises at least one of the following QoS split parameters:
a relay hop count;
a measurement result of a terminal;
QoS split suggestion information;
a Radio Resource Control (RRC) state; or
a resource acquisition mode.

9. The method of claim 8, wherein the relay hop count comprises a hop count between the first terminal and an end terminal in the multi-hop relay link.

10. The method of claim 8 or 9, wherein the measurement result of the terminal comprises a measurement result of at least one of the first terminal or one or more second terminals in the multi-hop relay link.

11. The method of any one of claims 8 to 10, wherein the QoS split suggestion information comprises QoS split suggestion information of at least one of the first terminal or one or more second terminals in the multi-hop relay link.

12. The method of any one of claims 8 to 11, wherein the RRC state and/or the resource acquisition mode comprises an RRC state and/or a resource acquisition mode of the first terminal and one or more second terminals in the multi-hop relay link.

13. The method of any one of claims 3, 4, or 7 to 12, further comprising:
receiving, by the first terminal, the first information from a network device, and/or from one or more second terminals.

14. The method of any one of claims 10 to 13, wherein the one or more second terminals comprise one or more terminals in the multi-hop relay link other than the first terminal; or
the one or more second terminals comprise remaining terminals from the first terminal to an end terminal in the multi-hop relay link.

15. The method of any one of claims 1 to 14, further comprising:
obtaining, by the first terminal, the QoS information of the multi-hop relay link.

16. The method of claim 15, wherein the QoS information of the multi-hop relay link comprises end-to-end QoS information.

17. The method of claim 16, wherein the first terminal is a control terminal, and the control terminal comprises at least one of an end terminal, a control relay terminal, or a serving terminal outside the multi-hop relay link.

18. The method of claim 17, wherein a manner of obtaining the end-to-end QoS information comprises at least one of:
receiving, by the control relay terminal, the end-to-end QoS information from the end terminal;
obtaining, by the end terminal, the end-to-end QoS information locally; or
receiving, by the serving terminal, the end-to-end QoS information from the end terminal.

19. The method of claim 17 or 18, wherein a manner of determining the control relay terminal comprises at least one of:
a relay terminal directly connected to the end terminal in the multi-hop relay link;
an upper layer of the first terminal indicating that the first terminal is the control relay terminal;
a source terminal configuring that the first terminal is the control relay terminal;
a destination terminal configuring that the first terminal is the control relay terminal;
a remote terminal configuring that the first terminal is the control relay terminal;
a network device configuring that the first terminal is the control relay terminal; or
the first terminal in a connected state being the control relay terminal.

20. The method of claim 15, wherein the QoS information of the multi-hop relay link comprises remaining QoS information from the first terminal to an end terminal.

21. The method of claim 20, wherein the remaining QoS information is obtained by the first terminal from a first directly connected terminal, and the first directly connected terminal is a terminal that has obtained the remaining QoS information in a QoS split direction and is directly connected to the first terminal.

22. The method of claim 20 or 21, wherein the first terminal is any relay terminal in the multi-hop relay link.

23. The method of any one of claims 1 to 22, further comprising:
sending, by the first terminal, the split information to one or more third terminals in the multi-hop relay link.

24. The method of claim 23, further comprising:
receiving, by the first terminal, first response information from the one or more third terminals, wherein the first response information is configured to indicate that the one or more third terminals accept or reject the split information.

25. The method of claim 24, further comprising:
in a case that the first response information is configured to indicate that the one or more third terminals reject the split information, reconfiguring, by the first terminal, new split information for the one or more third terminals.

26. The method of any one of claims 23 to 25, wherein the one or more third terminals comprise one or more terminals in the multi-hop relay link other than the first terminal; or
the one or more third terminals comprise a first directly connected terminal and/or a second directly connected terminal of the first terminal in the multi-hop relay link, wherein the first directly connected terminal is a terminal that has obtained remaining QoS information in a QoS split direction and is directly connected to the first terminal, and the second directly connected terminal is a terminal that has not obtained the remaining QoS information in the QoS split direction and is directly connected to the first terminal.

27. The method of any one of claims 1 to 26, further comprising:
receiving, by the first terminal, the split information from one or more fourth terminals in the multi-hop relay link.

28. The method of claim 27, further comprising:
sending, by the first terminal, second response information to the one or more fourth terminals, wherein the second response information is configured to indicate that the first terminal accepts or rejects the split information.

29. The method of claim 28, further comprising:
in a case that the second response information is configured to indicate that the first terminal rejects the split information, receiving, by the first terminal, new split information reconfigured by the one or more fourth terminals for the first terminal.

30. The method of any one of claims 27 to 29, wherein the one or more fourth terminals comprise one or more terminals in the multi-hop relay link other than the first terminal; or
the one or more fourth terminals comprise a first directly connected terminal and/or a second directly connected terminal of the first terminal in the multi-hop relay link, wherein the first directly connected terminal is a terminal that has obtained remaining QoS information in a QoS split direction and is directly connected to the first terminal, and the second directly connected terminal is a terminal that has not obtained the remaining QoS information in the QoS split direction and is directly connected to the first terminal.

31. The method of any one of claims 23 to 30, wherein the split information is carried by PC5-RRC signaling or PC5 non-access stratum signaling.

32. The method of any one of claims 1 to 31, wherein in a case of unidirectional split, an associated hop of a transmitting node in a data transmission direction of the multi-hop relay link is configured with corresponding split information, and the associated hop is a hop from the transmitting node to a directly connected receiving node.

33. The method of any one of claims 1 to 31, wherein in a case of bidirectional split, one or more associated hops of a node in the multi-hop relay link are configured with corresponding split information.

34. The method of any one of claims 1 to 33, wherein a manner of splitting the QoS information comprises at least one of:
a sum of delay information of hops in the multi-hop relay link being less than or equal to overall delay information of the multi-hop relay link; or
a product of accuracy rates of the hops in the multi-hop relay link being greater than or equal to an overall accuracy rate of the multi-hop relay link.

35. A relay communication method, comprising:
obtaining, by a network device, split information of Quality of Service (QoS) information of a multi-hop relay link.

36. The method of claim 35, wherein obtaining, by the network device, the split information of the QoS information of the multi-hop relay link comprises:
receiving, by the network device, the split information of the QoS information of the multi-hop relay link from a first terminal.

37. The method of claim 36, wherein the first terminal is in a connected state.

38. The method of any one of claims 35 to 37, further comprising:
sending, by the network device, a split QoS configuration to the first terminal, wherein the split QoS configuration comprises a rule and/or a mapping relationship for splitting the QoS information.

39. The method of any one of claims 35 to 38, further comprising:
sending, by the network device, first information to the first terminal, wherein the first information comprises a QoS split parameter.

40. The method of claim 35, wherein obtaining, by the network device, the split information of the QoS information of the multi-hop relay link comprises:
performing, by the network device, QoS split on the QoS information of the multi-hop relay link to obtain the split information.

41. The method of claim 40, further comprising:
receiving, by the network device, first information from the first terminal, wherein the first information is used to assist the network device in performing the QoS split,
wherein performing, by the network device, the QoS split on the QoS information of the multi-hop relay link to obtain the split information comprises:
performing, by the network device, the QoS split on the QoS information of the multi-hop relay link based on the first information and/or a split QoS configuration to obtain the split information.

42. The method of claim 39 or 41, wherein the first information comprises at least one of the following QoS split parameters:
a relay hop count;
a measurement result of a terminal;
QoS split suggestion information;
a Radio Resource Control (RRC) state; or
a resource acquisition mode.

43. The method of claim 42, wherein the relay hop count comprises a hop count between the first terminal and an end terminal in the multi-hop relay link.

44. The method of claim 42 or 43, wherein the measurement result of the terminal comprises a measurement result of the first terminal and one or more second terminals in the multi-hop relay link.

45. The method of any one of claims 42 to 44, wherein the QoS split suggestion information comprises QoS split suggestion information of the first terminal and one or more second terminals in the multi-hop relay link.

46. The method of any one of claims 42 to 45, wherein the RRC state and/or the resource acquisition mode comprises an RRC state and/or a resource acquisition mode of the first terminal and one or more second terminals in the multi-hop relay link.

47. The method of any one of claims 44 to 46, wherein the one or more second terminals comprise one or more terminals in the multi-hop relay link other than the first terminal; or
the one or more second terminals comprise remaining terminals from the first terminal to an end terminal in the multi-hop relay link.

48. The method of any one of claims 35 to 47, further comprising:
obtaining, by the network device, the QoS information of the multi-hop relay link.

49. The method of claim 48, wherein the QoS information of the multi-hop relay link comprises end-to-end QoS information, or remaining QoS information from the first terminal to an end terminal.

50. The method of any one of claims 35 to 49, wherein a manner of splitting the QoS information comprises at least one of:
a sum of delay information of hops in the multi-hop relay link being less than or equal to overall delay information of the multi-hop relay link; or
a product of accuracy rates of the hops in the multi-hop relay link being greater than or equal to an overall accuracy rate of the multi-hop relay link.

51. A first terminal, comprising:
an obtaining unit, configured to obtain split information of Quality of Service (QoS) information of a multi-hop relay link.

52. The first terminal of claim 51, wherein the obtaining unit is configured to perform QoS split on the QoS information of the multi-hop relay link to obtain the split information.

53. The first terminal of claim 52, wherein the splitting subunit is configured to perform the QoS split on the QoS information of the multi-hop relay link based on first information and/or a split QoS configuration to obtain the split information, wherein the first information comprises a QoS split parameter.

54. The first terminal of claim 53, further comprising:
a first receiving unit, configured to receive the split QoS configuration from a network device, wherein the split QoS configuration comprises a rule and/or a mapping relationship for splitting the QoS information.

55. The first terminal of any one of claims 52 to 54, further comprising:
a first sending unit, configured to send the split information to a network device in a case that the first terminal is in a connected state.

56. The first terminal of claim 51, wherein the obtaining unit is configured to receive the split information which is obtained via QoS split performed by a network device on the QoS information of the multi-hop relay link.

57. The first terminal of claim 56, further comprising:
a second sending unit, configured to send first information to the network device, wherein the first information is used to assist the network device in performing the QoS split;
a second receiving unit, configured to receive the split information which is obtained via the QoS split performed by the network device on the QoS information of the multi-hop relay link, which comprises receiving, by the first terminal from the network device, the split information obtained by performing the QoS split based on the first information and/or a split QoS configuration.

58. The first terminal of claim 53, 54 or 57, wherein the first information comprises at least one of the following QoS split parameters:
a relay hop count;
a measurement result of a terminal;
QoS split suggestion information;
a Radio Resource Control (RRC) state; or
a resource acquisition mode.

59. The first terminal of claim 58, wherein the relay hop count comprises a hop count between the first terminal and an end terminal in the multi-hop relay link.

60. The first terminal of claim 58 or 59, wherein the measurement result of the terminal comprises a measurement result of at least one of the first terminal or one or more second terminals in the multi-hop relay link.

61. The first terminal of any one of claims 58 to 60, wherein the QoS split suggestion information comprises QoS split suggestion information of at least one of the first terminal or one or more second terminals in the multi-hop relay link.

62. The first terminal of any one of claims 58 to 61, wherein the RRC state and/or the resource acquisition mode comprises an RRC state and/or a resource acquisition mode of the first terminal and one or more second terminals in the multi-hop relay link.

63. The first terminal of any one of claims 53, 54, or 57 to 62, further comprising:
a third receiving unit, configured to receive the first information from a network device, and/or from one or more second terminals.

64. The first terminal of any one of claims 60 to 63, wherein the one or more second terminals comprise one or more terminals in the multi-hop relay link other than the first terminal; or
the one or more second terminals comprise remaining terminals from the first terminal to an end terminal in the multi-hop relay link.

65. The first terminal of any one of claims 51 to 64, wherein the obtaining unit is further configured to obtain the QoS information of the multi-hop relay link.

66. The first terminal of claim 65, wherein the QoS information of the multi-hop relay link comprises end-to-end QoS information.

67. The first terminal of claim 66, wherein the first terminal is a control terminal, and the control terminal comprises at least one of an end terminal, a control relay terminal, or a serving terminal outside the multi-hop relay link.

68. The first terminal of claim 67, wherein a manner of obtaining the end-to-end QoS information comprises at least one of:
the control relay terminal receiving the end-to-end QoS information from the end terminal;
the end terminal obtaining the end-to-end QoS information locally; or
the serving terminal receiving the end-to-end QoS information from the end terminal.

69. The first terminal of claim 67 or 68, wherein a manner of determining the control relay terminal comprises at least one of:
a relay terminal directly connected to the end terminal in the multi-hop relay link;
an upper layer of the first terminal indicating that the first terminal is the control relay terminal;
a source terminal configuring that the first terminal is the control relay terminal;
a destination terminal configuring that the first terminal is the control relay terminal;
a remote terminal configuring that the first terminal is the control relay terminal;
a network device configuring that the first terminal is the control relay terminal; or
the first terminal in a connected state being the control relay terminal.

70. The first terminal of claim 65, wherein the QoS information of the multi-hop relay link comprises remaining QoS information from the first terminal to an end terminal.

71. The first terminal of claim 70, wherein the remaining QoS information is obtained by the first terminal from a first directly connected terminal, and the first directly connected terminal is a terminal that has obtained the remaining QoS information in a QoS split direction and is directly connected to the first terminal.

72. The first terminal of claim 70 or 71, wherein the first terminal is any relay terminal in the multi-hop relay link.

73. The first terminal of any one of claims 51 to 72, further comprising:
a third sending unit, configured to send the split information to one or more third terminals in the multi-hop relay link.

74. The first terminal of claim 73, further comprising:
a fourth receiving unit, configured to receive first response information from the one or more third terminals, wherein the first response information is configured to indicate that the one or more third terminals accept or reject the split information.

75. The first terminal of claim 74, further comprising:
a fourth sending unit, configured to reconfigure new split information for the one or more third terminals in a case that the first response information is configured to indicate that the one or more third terminals reject the split information.

76. The first terminal of any one of claims 73 to 75, wherein the one or more third terminals comprise one or more terminals in the multi-hop relay link other than the first terminal; or
the one or more third terminals comprise a first directly connected terminal and/or a second directly connected terminal of the first terminal in the multi-hop relay link, wherein the first directly connected terminal is a terminal that has obtained remaining QoS information in a QoS split direction and is directly connected to the first terminal, and the second directly connected terminal is a terminal that has not obtained the remaining QoS information in the QoS split direction and is directly connected to the first terminal.

77. The first terminal of any one of claims 51 to 76, further comprising:
a fifth receiving unit, configured to receive the split information from one or more fourth terminals in the multi-hop relay link.

78. The first terminal of claim 77, further comprising:
a fifth sending unit, configured to send second response information to the one or more fourth terminals, wherein the second response information is configured to indicate that the first terminal accepts or rejects the split information.

79. The first terminal of claim 78, wherein the fifth receiving unit is further configured to receive new split information reconfigured by the one or more fourth terminals for the first terminal in a case that the second response information is configured to indicate that the first terminal rejects the split information.

80. The first terminal of any one of claims 77 to 79, wherein the one or more fourth terminals comprise one or more terminals in the multi-hop relay link other than the first terminal; or
the one or more fourth terminals comprise a first directly connected terminal and/or a second directly connected terminal of the first terminal in the multi-hop relay link, wherein the first directly connected terminal is a terminal that has obtained remaining QoS information in a QoS split direction and is directly connected to the first terminal, and the second directly connected terminal is a terminal that has not obtained the remaining QoS information in the QoS split direction and is directly connected to the first terminal.

81. The first terminal of any one of claims 73 to 80, wherein the split information is carried by PC5-RRC signaling or PC5 non-access stratum signaling.

82. The first terminal of any one of claims 51 to 81, wherein in a case of unidirectional split, an associated hop of a transmitting node in a data transmission direction of the multi-hop relay link is configured with corresponding split information, and the associated hop is a hop from the transmitting node to a directly connected receiving node.

83. The first terminal of any one of claims 51 to 81, wherein in a case of bidirectional split, one or more associated hops of a node in the multi-hop relay link are configured with corresponding split information.

84. The first terminal of any one of claims 51 to 83, wherein a manner of splitting the QoS information comprises at least one of:
a sum of delay information of hops in the multi-hop relay link being less than or equal to overall delay information of the multi-hop relay link; or
a product of accuracy rates of the hops in the multi-hop relay link being greater than or equal to an overall accuracy rate of the multi-hop relay link.

85. A network device, comprising:
an obtaining unit, configured to obtain split information of Quality of Service (QoS) information of a multi-hop relay link.

86. The network device of claim 85, wherein the obtaining unit is configured to receive the split information of the QoS information of the multi-hop relay link from a first terminal.

87. The network device of claim 86, wherein the first terminal is in a connected state.

88. The network device of any one of claims 85 to 87, further comprising:
a first sending unit, configured to send a split QoS configuration to the first terminal, wherein the split QoS configuration comprises a rule and/or a mapping relationship for splitting the QoS information.

89. The network device of any one of claims 85 to 88, further comprising:
a second sending unit, configured to send first information to the first terminal, wherein the first information comprises a QoS split parameter.

90. The network device of claim 85, wherein the obtaining unit is configured to perform QoS split on the QoS information of the multi-hop relay link to obtain the split information.

91. The network device of claim 90, wherein the obtaining unit is configured to receive first information from the first terminal, wherein the first information is used to assist the network device in performing the QoS split; and perform the QoS split on the QoS information of the multi-hop relay link based on the first information and/or a split QoS configuration to obtain the split information.

92. The network device of claim 89 or 91, wherein the first information comprises at least one of the following QoS split parameters:
a relay hop count;
a measurement result of a terminal;
QoS split suggestion information;
a Radio Resource Control (RRC) state; or
a resource acquisition mode.

93. The network device of claim 92, wherein the relay hop count comprises a hop count between the first terminal and an end terminal in the multi-hop relay link.

94. The network device of claim 92 or 93, wherein the measurement result of the terminal comprises a measurement result of the first terminal and one or more second terminals in the multi-hop relay link.

95. The network device of any one of claims 92 to 94, wherein the QoS split suggestion information comprises QoS split suggestion information of the first terminal and one or more second terminals in the multi-hop relay link.

96. The network device of any one of claims 92 to 95, wherein the RRC state and/or the resource acquisition mode comprises an RRC state and/or a resource acquisition mode of the first terminal and one or more second terminals in the multi-hop relay link.

97. The network device of any one of claims 94 to 96, wherein the one or more second terminals comprise one or more terminals in the multi-hop relay link other than the first terminal; or
the one or more second terminals comprise remaining terminals from the first terminal to an end terminal in the multi-hop relay link.

98. The network device of any one of claims 85 to 97, wherein the obtaining unit is further configured to obtain the QoS information of the multi-hop relay link.

99. The network device of claim 98, wherein the QoS information of the multi-hop relay link comprises end-to-end QoS information, or remaining QoS information from the first terminal to an end terminal.

100. The network device of any one of claims 85 to 99, wherein a manner of splitting the QoS information comprises at least one of:
a sum of delay information of hops in the multi-hop relay link being less than or equal to overall delay information of the multi-hop relay link; or
a product of accuracy rates of the hops in the multi-hop relay link being greater than or equal to an overall accuracy rate of the multi-hop relay link.

101. A terminal device, comprising: a processor and a memory, wherein the memory is configured to store a computer program, and the processor is configured to invoke and run the computer program stored in the memory to cause the terminal device to perform the method of any one of claims 1 to 34.

102. A network device, comprising: a processor and a memory, wherein the memory is configured to store a computer program, and the processor is configured to invoke and run the computer program stored in the memory to cause the network device to perform the method of any one of claims 35 to 50.

103. A chip, comprising: a processor, wherein the processor configured to invoke and run a computer program from a memory, to cause a device installed with the chip to perform the method of any one of claims 1 to 34 or to perform the method of any one of claims 35 to 50.

104. A computer-readable storage medium, configured to store a computer program, which, when run by a device, causes the device to perform the method of any one of claims 1 to 34 or to perform the method of any one of claims 35 to 50.

105. A computer program product, comprising computer program instructions, which cause a computer to perform the method of any one of claims 1 to 34 or to perform the method of any one of claims 35 to 50.

106. A computer program, wherein the computer program is configured to cause a computer to perform the method of any one of claims 1 to 34 or to perform the method of any one of claims 35 to 50.
